# EUROPÄISCHE PATENTSCHRIFT

(11) **EP 3 221 409 B1**
(45) Veröffentlichungstag und Bekanntmachung des Hinweises auf die Patenterteilung: **07.11.2018**
(21) Anmeldenummer: 15798091.3
(22) Anmeldetag: 20.11.2015
(51) Int. Cl.: C09D 183/10, C09D 183/12

(54) **POLYSILOXANE ALS ANTI-ADHÄSIVE UND SCHMUTZABWEISENDE ZUSÄTZE, VERFAHREN ZU DEREN HERSTELLUNG UND DEREN VERWENDUNG**
POLYSILOXANES AS ANTI-ADHESIVE AND DIRT-REPELLANT ADDITIVES, METHOD FOR THEIR PREPARATION AND THEIR USE
POLYSILOXANE EN TANT QU'ANTI-ADHÉSIF ET ADDITIFS REJETANT LA SALETÉ, LEUR PROCÉDÉ DE FABRICATION ET LEUR UTILISATION

(30) Priorität: 20.11.2014 EP 14194191
(43) Veröffentlichungstag der Anmeldung: 27.09.2017
(73) Patentinhaber: BYK-Chemie GmbH, 46483 Wesel (DE)
(72) Erfinder: JAUNKY, Wojciech, 46485 Wesel (DE); GRIESEL, Wolfgang, 46499 Hamminkeln (DE)
(74) Vertreter: Arlt, Klaus
(86) Internationale Anmeldenummer: PCT/EP2015/077265
(87) Internationale Veröffentlichungsnummer: WO 2016/079319

(56) Entgegenhaltungen:
- EP-A1- 2 226 361
- EP-A1- 2 716 685
- WO-A1-2008/041459
- US-A- 5 082 891
- US-A- 5 169 919

## Beschreibung

Die vorliegende Erfindung betrifft epoxyfunktionelle Polysiloxane, die sich durch die Addition monovinylfunktioneller Polysiloxane und monovinylfunktioneller Epoxyverbindungen an Alkyl-Wasserstoff-Polysiloxane herstellen lassen. Die vorliegende Erfindung betrifft des Weiteren die Verwendung der Produkte als Additive in Beschichtungsmittelzusammensetzungen, polymeren Formmassen oder Thermoplasten, beispielsweise als Oberflächenmodifizierungsmittel, wie beispielsweise als Fluss- und Verlaufmittel, Gleitmittel, Mittel zur Verbesserung der Kratzbeständigkeit, Hydrophobierungsmittel und Mittel zur Verbesserung der Reinigungseigenschaften des additivierten Materials.

Es ist bekannt silikonhaltige Verbindungen zu Beschichtungsstoffen und polymeren Formmassen oder Thermoplasten hinzuzufügen (Lackadditive von Johan Bieleman, Weinheim; New York; Chichester; Brisbane; Singapore; Toronto: Wiley-VCH, 1998), um beispielsweise Eigenschaften des Substrats, wie die Benetzung, den Verlauf und die Gleiteigenschaften der Beschichtungsoberflächen zu verbessern oder zu erhalten.

Verschiedenste Polysiloxane werden in einer Vielzahl technischer Bereiche zu unterschiedlichsten Zwecken eingesetzt.. Es ist beispielsweise bekannt, Beschichtungsmitteln, polymeren Formmassen oder Thermoplasten kammartige Polysiloxane zuzusetzen, um bestimmte Eigenschaften zu erzielen, beispielsweise eine verbesserte Kratzbeständigkeit oder um eine leicht zu reinigende Oberflächen zu erhalten.

So beschreibt die EP 1193303 B1 Beschichtungen mit anti-adhäsiven, schmutzabweisenden Eigenschaften, die aus Beschichtungsmitteln erhalten werden, denen als Additiv 0,1 bis 10 Gew.-% bezogen auf den Feststoffgehalt des Beschichtungsmittels eines Polymers zugesetzt werden, welches ein Gewichtsmittel des Molekulargewichts von 2000 bis 200000 besitzt und das aus einem polymeren Basismolekül sowie über Si-C-Bindungen kovalent an das Basismolekül gebundenen Polydiorganosiloxanseitenketten besteht, wobei die Seitenketten ein Gewichtsmittel des Molekulargewichts zwischen 1000 und 30000 aufweisen und deren Anteil am Gesamtgewicht des verzweigten Polymers 5 bis 25 Gew.-% beträgt.
In US 2013/0289134 werden Kammcopolymere auf Basis eines Epoxy-Amin-Rückgrats beschrieben, an welches Polysiloxanketten angepfropft sind. Die daraus hergestellten Beschichtungen weisen reinigungsfreundliche Oberflächen ("easy-toclean") auf.
Epoxy-funktionelle Polysiloxane und Verfahren zu deren Herstellung werden in US 5,512,640 beschrieben. Deren Verwendung zur Modifizierung von Harzzusammensetzungen und Verbundstoffen ist ebenfalls bekannt. So beschreibt beispielsweise die US 6,342,303 B1 epoxy-funktionelle Polysiloxane zur Modifizierung phenolischer Harze, zwecks Verbesserung der interlaminaren Scherfestigkeit nach Temperatur- und Feuchtigkeitsbelastung.
Die Verbesserung der Bruchzähigkeit von duroplastischen Harzen wie Epoxyharzen wurde beispielsweise im Iranian Polymer Journal 19 (3) 2010, Seiten 185 bis 196 beschrieben. Durch die Verwendung polyether-modifizierter Polysiloxane wird eine Verbesserung der Bruchzähigkeit, Schlagzähigkeit und der Delaminierungresistenz der Verbundwerkstoffe erreicht. Durch die Modifikation des Polysiloxans mit Polyetherketten wird die Kompatibiliät mit Epoxysystemen erhöht.

Das Dokument US 5 082 891 offenbart ein Polysiloxan, das durch die Addition einer epoxyfunktionellen, monovinylfunktionellen Komponente (z.B. einem Phenol-Novolac Harz) und eines divinylfunktionellen Polysiloxans an ein Si-H funktionelles Polysiloxan erhältlich ist.

Die Aufgabe der vorliegenden Erfindung bestand in der Verbesserung der Oberflächeneigenschaften von gehärteten Zusammensetzungen, insbesondere gehärteten Beschichtungsmitteln, polymeren Formmassen oder Thermoplasten. Insbesondere bestand die Aufgabe darin, Beschichtungsmittel, polymere Formmassen oder Thermoplasten, bereitzustellen, die eine verbesserte anti-adhäsive und/oder schmutzabweisende Wirkung zeigen. Weiterhin sollen die zur Vermittlung dieser verbesserten Eigenschaften zugesetzten Additive die anderen Eigenschaften der Beschichtungsmittel, polymeren Formmassen oder Thermoplasten, möglichst nicht beeinträchtigen. Die zugesetzten Additive sollen außerdem in relativ geringen Mengen ihre Wirksamkeit entfalten können. Die Beschichtungsmittel, polymeren Formmassen oder Thermoplasten, sollen ihre anti-adhäsive und/oder schmutzabweisende Wirkung weiterhin über einen langen Zeitraum, beispielsweise von bis zu mehreren Jahren, nahezu beibehalten. Dies sollte auch die Permanenz des anti-adhäsiven und/oder schmutzabweisenden Effektes über mehrere Reinigungszyklen hinweg mit einschließen.

Überraschenderweise hat sich gezeigt, dass die oben beschriebenen Aufgaben durch Polysiloxane, die sich durch die Addition mindestens eines monovinylfunktionellen Polysiloxans und mindestens einer epoxyfunktionellen, monovinylfunktionellen Komponente an ein Si-H-funktionelles Polysiloxan herstellen lassen, gelöst werden. Die vorgenannten epoxyfunktionellen Polysiloxane werden hierin auch als erfindungsgemäße Polysiloxane bezeichnet. Die erfindungsgemäßen Polysiloxane weisen üblicherweise keine Si-H-Gruppen mehr auf. Die erfindungsgemäßen Polysiloxane sind vorzugsweise kammförmig aufgebaut.

Beschichtungsmittel, polymere Formmassen oder Thermoplasten, denen diese Additionsprodukte zugesetzt werden, weisen ausgezeichnete anti-adhäsive und schmutzabweisende Eigenschaften auf. Die erfindungsgemäßen Additionsprodukte sind sehr verträglich mit den üblichen Inhaltsstoffen von Beschichtungsmitteln, polymeren Formmassen und Thermoplasten und beeinträchtigen üblicherweise nicht deren andere Eigenschaften. Dabei können die erfindungsgemäßen epoxyfunktionellen Polysiloxane den Beschichtungsmitteln, polymeren Formmassen oder Thermoplasten, in relativ geringen Mengen (Additivmengen) zugesetzt werden und bereits in diesen geringen Mengen ihre Wirkung entfalten. Die physikalischen Eigenschaften der ursprünglichen Beschichtungsmittel, polymeren Formmassen oder Thermoplasten beispielsweise in Bezug auf Korrosionsschutz, Glanzhaltung und Witterungsbeständigkeit werden durch die geringen Konzentrationen des Additivs nicht beeinträchtigt. Beschichtungsmittel, polymere Formmassen oder Thermoplasten, die die erfindungsgemäßen Additionsprodukte enthalten, zeigen die gewünschten Eigenschaften in der Regel auch über einen Zeitraum von mehreren Jahren und behalten diese Eigenschaften auch über mehrere Reinigungszyklen hinweg bei.

### Ausgangsverbindungen

### Si-H-funktionelle Polysiloxane

Bei den Si-H-funktionellen Polysiloxanen kann es sich um kettenförmige Polysiloxane, cyclische Polysiloxane, verzweigte Polysiloxane oder vernetzte Polysiloxane handeln. Bevorzugt handelt es sich um kettenförmige oder verzweigte Polysiloxane. Besonders bevorzugt handelt es sich um kettenförmige Polysiloxane. Beim Si-H-funktionellen Polysiloxan handelt es sich besonders bevorzugt um ein Alkyl-, Aryl- oder Aralkyl-Wasserstoff-Polysiloxan. Ganz besonders bevorzugt handelt es sich um ein Alkyl-Wasserstoff-Polysiloxan, welches als Alkyl-Gruppen C₁-C₁₄-Alkylgruppen, vorzugsweise C₁-C₄-Alkylgruppen und ganz besonders bevorzugt Methylgruppen tragen. Die Alkylgruppen können zusätzliche Arylgruppen tragen (man spricht dann von aralkylgruppentragenden Polysiloxanen). Liegen Aralkylgruppen im Polysiloxan vor, so enthalten diese vorzugsweise 7 bis 14 Kohlenstoffatome. Die Polysiloxane können jedoch auch, wenngleich weniger bevorzugt, Arylgruppen tragen. Liegen Arylgruppen im Polysiloxan vor, so enthalten diese vorzugsweise 6 bis 14 Kohlenstoffatome. Auch einsetzbar sind solche Si-H-funktionellen Polysiloxane, die sowohl Alkylgruppen als auch Arylgruppen und/oder Aralkylgruppen tragen. Ganz bevorzugt handelt es sich bei dem Si-H-funktionellen Polysiloxan um ein Methyl-Wasserstoff-Polysiloxan.

### Monovinylfunktionelle Polysiloxane

An die vorgenannten Si-H-funktionellen Polysiloxane lässt sich beispielsweise durch Additionsreaktion, insbesondere Hydrosilylierungsreaktion, ein monovinylfunktionelles Polysiloxan addieren. Der Begriff "monovinylisch" umfasst im Rahmen dieser Anmeldung alle Spezies, das heißt Verbindungen und polymere Spezies, die genau eine Kohlenstoff-Kohlenstoff-Doppelbindung aufweisen, wobei diese endständig ist. Die monovinylfunktionellen Polysiloxane lassen sich daher vorzugsweise durch folgende Strukturformel (I) wiedergeben: 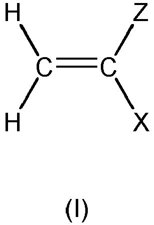 worin Z für Wasserstoff oder eine Alkylgruppe mit 1 bis 4, vorzugsweise 1 oder 2 Kohlenstoffatomen und X für einen einbindigen Rest der folgenden Formel steht: 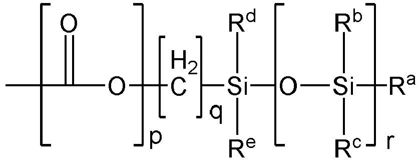
worin p = 0 oder 1, q = 0 bis 30 und r = 1 bis 400, vorzugsweise 5 bis 200, besonders bevorzugt 10 bis 140 und ganz besonders bevorzugt 10 bis 80,
ist und sofern p = 1 ist q ≥ 2, vorzugsweise q ≥ 3 ist,
R^{a} für einen linearen halogenierten oder nicht halogenierten Alkylrest mit 1 bis 30 Kohlenstoffatomen, einen verzweigten oder zyklischen, halogenierten oder nicht halogenierten Alkylrest mit 3 bis 30 Kohlenstoffatomen oder einen Arylrest mit 6 bis 30 Kohlenstoffatomen oder einen Alkylarylrest oder einen Arylalkylrest mit 7 bis 30 Kohlenstoffatomen oder einen Alkoxyalkylenoxidalkylrest oder Alkoxypolyalkylenoxidalkylrest (wie z.B. CH₃(OCH₂CH₂)ₙO(CH₂)₃ mit n=1 bis 10) steht,
alle R^{b}, R^{c}, R^{d} und R^{e} unabhängig voneinander für einen linearen halogenierten oder nicht halogenierten Alkylrest mit 1 bis 30 Kohlenstoffatomen, einen verzweigten oder zyklischen, halogenierten oder nicht halogenierten Alkylrest mit 3 bis 30 Kohlenstoffatomen oder einen Arylrest mit 6 bis 30 Kohlenstoffatomen oder einen Alkylarylrest oder einen Arylalkylrest mit 7 bis 30 Kohlenstoffatomen stehen,
R^{d} und R^{e} zudem unabhängig voneinander für R^{a}[SiR^{b}R^{c}O]ᵣ stehen können, worin R^{a}, R^{b}, R^{c} und r wie oben definiert sind und unabhängig davon ausgewählt sind.

Steht beispielsweise Z für Wasserstoff, p für 0 und q für 1, so spricht man von Allylpolysiloxanen, steht beispielsweise Z für CH₃, p für 1 und q für 3, so bezeichnet dies ein 3-(Methacryloxy)propyl-Polysiloxan.
Im Rahmen der Erfindung werden nur streng monovinylfunktionelle Polysiloxane eingesetzt, das heißt solche, die nur eine Vinylgruppe aufweisen. Eine Methode zur Herstellung der monovinylfunktionellen Polysiloxane beinhaltet die lebende Polymerisation von zyklischen Siloxanen, um ein Polymer mit kontrolliertem Molekulargewicht zu erhalten, die Terminierung wird beispielsweise durch Dialkyl(vinyl)chlorsilane erreicht.

Die Synthese linearer monovinylfunktioneller Polysiloxane kann beispielsweise über eine lebende anionische Polymerisation zyklischer Polysiloxane, beispielsweise eines Hexamethylencyclotrisiloxans, erfolgen. Dieses Verfahren ist unter anderem bei T. Suzuki in Polymer, 30 (1989) 333, WO 2009/086079 A2, EP 1 985 645 A2 und US 2013/0041098 A1 beschrieben. Die Reaktion wird beispielhaft anhand des Hexamethylencyclotrisiloxans, in folgendem Reaktionsschema dargestellt:

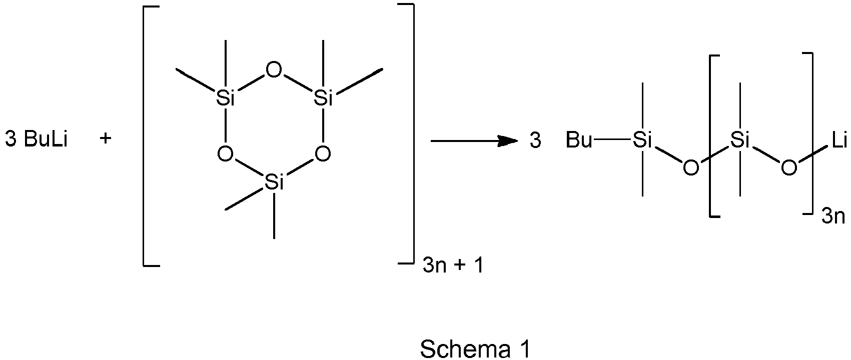

Die Funktionalisierung der Endgruppe kann mit funktionellen Chlorsilanen, beispielsweise Dimethyl(vinyl)chlorsilan, analog dem folgenden Reaktionsschema nach dem Durchschnittsfachmann bekannten Verfahren erfolgen.

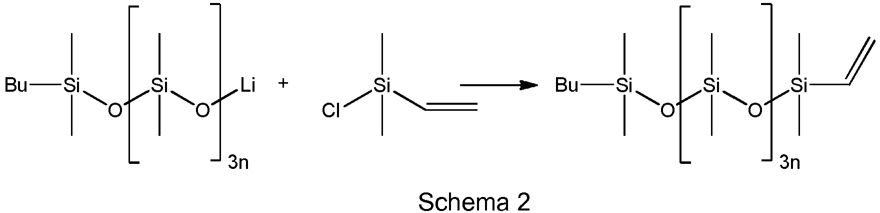

Das nach obigem Schema 2 exemplarisch erhaltene Produkt entspricht einem Produkt nach Formel (I), worin Z = H,p = q = 0, r = 3n+1, R^{b} = R^{c} = R^{d} = R^{e} = CH₃ und R^{a} = Butyl.

Wenn verzweigte monovinylfunktionelle Polysiloxane gewünscht werden, können Monomethyl(vinyl)dichlorsilan oder Trichlor(vinyl)silan zur Funktionalisierung der Endgruppe eingesetzt werden, wobei für jedes Chloratom ein Polysiloxanrest eingeführt wird.

### Epoxyfunktionelle, monovinylfunktionelle Komponente

Hierbei handelt es sich um eine von den monovinylfunktionellen Polysiloxanen verschiedene ebenfalls monovinylfunktionelle erfindungswesentliche Komponente, die an die Si-H-funktionellen Polysiloxane addiert wird.

Bei der epoxyfunktionellen, monovinylfunktionellen Komponente kann es sich um Verbindungen handeln, die eine Epoxygruppe und eine Vinylgruppe enthalten. Während derartige Verbindungen eine definierte Struktur besitzen, ist es auch möglich, polymere Spezies einzusetzen. So können zwischen der Epoxygruppe und der Vinylgruppe auch polymere Strukturelemente vorhanden sein, wie beispielsweise Polyalkylenoxy-Gruppen, insbesondere solche aus Ethylenoxid und/oder Propylenoxid.

In der Regel ist die epoxyfunktionelle, monovinylfunktionelle Komponente monoepoxyfunktionell.

Vorzugsweise ist die epoxyfunktionelle, monovinylfunktionelle Komponente aliphatisch.

Bevorzugte epoxyfunktionelle, monovinylfunktionelle Komponenten lassen sich durch folgende Strukturformel (II) wiedergeben: 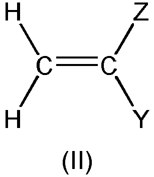 worin Z für Wasserstoff oder eine Alkylgruppe mit 1 bis 4, vorzugsweise 1 oder 2 Kohlenstoffatomen und Y für einen einbindigen Rest der folgenden Formel steht:

-L-Epoxy

L steht hierin für eine Verbindungsgruppe (auch als Linker bezeichnet) und Epoxy für einen Oxiranring, wobei der Oxiranring mit einem oder beiden Kohlenstoffatomen an den Linker L gebunden ist. Vorzugsweise handelt es sich beim Linker L um einen gesättigten, aliphatischen Rest, der Heteroatome, vorzugsweise Sauerstoffatome enthalten darf. Ganz besonders bevorzugt handelt es sich um einen heteroatomfreien, gesättigten, aliphatischen Kohlenwasserstoffrest. Im Rahmen der vorliegenden Erfindung umfasst der Begriff "aliphatischer Rest" - wie üblich in der chemischen Nomenklatur - acyclische und cyclische aliphatische Reste.

Beispiele für epoxyfunktionelle, monovinylfunktionelle Verbindungen sind 4-Vinylcyclohexenoxid, Allylglycidylether, Methallylglycidylether, 1-Methyl-4-isopropenylcyclohexenoxid, 2,6-Dimethyl-2,3-epoxy-7-octen, 1,4-Dimethyl-4-vinylcyclohexenoxid, Vinylnorbornenmonooxid und Dicyclopentadienmonooxid.

Beispiele für epoxyfunktionelle, monovinylfunktionelle Spezies mit polymeren Strukturelementen sind alpha-Allyl-omega-glycidyloxy-polyethylen-glykol und alpha-Allyl-omega-glycidyloxy-polyethylen/polypropylen-glykol, und dergleichen.

Besonders bevorzugt werden im Rahmen der vorliegenden Erfindung, 4-Vinylcyclohexenoxid und Allylglycidylether eingesetzt.

### Andere in die erfindungsgemäßen Polysiloxanen einbaubare Komponenten

Neben dem zwingend in die erfindungsgemäßen Polysiloxane einzubauenden monovinylfunktionellen Polysiloxan und der von diesem verschiedenen epoxyfunktionellen, monovinylfunktionellen Komponente, können noch weitere Bausteine in das erfindungsgemäße Polysiloxan eingebaut werden, die wiederum definitionsgemäß verschieden von den vorgenannten Ausgangsverbindungen sind.

Der Einbau weiterer Komponenten dient insbesondere der Feinabstimmung der Verträglichkeit der erfindungsgemäßen Polysiloxane mit den Systemen in denen diese eingesetzt werden wie beispielsweise Beschichtungsmitteln, polymeren Formmassen und Thermoplasten.

Diese Bausteine dürfen nach ihrer Reaktion mit dem Si-H-funktionellen Polysiloxan keine gegenüber Epoxygruppen reaktiven funktionellen Gruppen enthalten. Enthalten die Spezies dieser Komponente gegenüber Epoxygruppen reaktive funktionelle Gruppen, so sind diese Spezies mit dem Si-H-funktionellen Polysiloxan unter Verbrauch der mit Epoxygruppen reaktiven Gruppen zeitlich vor den monovinylfunktionellen Komponenten zur Reaktion zu bringen, das heißt bevor eine Hydrosilylierung durch geführt wird.

Vorzugsweise handelt es sich bei den anderen, das heißt fakultativ in die erfindungsgemäßen Polysiloxane einbaubaren Komponenten um monovinylfunktionelle Komponenten mit folgender Strukturformel (III): 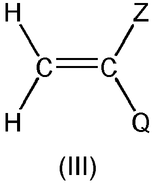 worin Z für Wasserstoff oder eine Alkylgruppe mit 1 bis 4, vorzugsweise 1 oder 2 Kohlenstoffatomen steht und Q für einen einbindigen Rest der folgenden Formel steht:

-(L')ᵥ-R

worin v = 0 oder 1 ist,
L' für eine Verbindungsgruppe steht (auch als Linker bezeichnet) und
R für einen Rest -SiR^{x}ₙR^{y}₃₋ₙ steht, worin
n = 1 bis 3 ist,
R^{x} unabhängig voneinander für Halogen, vorzugsweise Chlor, OAlkyl, vorzugsweise O-C₁₋₄-Alkyl, besonders bevorzugt OMethyl oder OEthyl oder für O-CO-Alkyl, vorzugsweise O-CO-CH₃ steht, und
R^{y} für Alkyl, vorzugsweise C₁₋₄-Alkyl, besonders bevorzugt für Methyl oder Ethyl steht, oder für Aryl mit 6 bis 10 Kohlenstoffatomen; oder
R für einen polymeren Rest mit Ether-, Ester- und/oder Urethangruppen.

Aus Gründen der Lagerstabilität der erfindungsgemäßen Polysiloxane sollte die Gruppe Q vorzugsweise keine gegenüber Epoxygruppen reaktiven Gruppen enthalten, insbesondere keine Hydroxylgruppen enthalten.

Vorzugsweise handelt es sich beim Linker L' um einen gesättigten, aliphatischen Rest oder um einen araliphatischen Rest. Ganz besonders bevorzugt handelt es sich um einen heteroatomfreien, gesättigten, aliphatischen Kohlenwasserstoffrest. Ganz besonders bevorzugt steht L' für einen Alkylenrest mit 1 bis 12 Kohlenstoffatomen oder einen Phenylenalkylen-Rest mit 7 bis 10 Kohlenstoffatomen.

Es können selbstverständlich auch Mischungen der vorgenannten fakultativen Komponenten eingesetzt werden, um die Verträglichkeit der erfindungsgemäßen Polysiloxane einer besonders guten Feinabstimmung der Eigenschaften zugänglich zu machen.

Die Silane (Q = -(L')ᵥ-SiR^{x}ₙR^{y}₃₋ₙ) der obigen Formel weisen eine endständige monovinylische Gruppe auf, beispielsweise eine endständige Alkenylgruppe wie eine Vinylgruppe (Z = H, v = 0) oder Allylgruppe (Z = H, L' = CH₂, v=1) oder einen 5-Hexenylrest (Z = H, L' = n-C₄H₈, v=1), 7-Octenylrest (Z = H, L' = n-C₆H₁₂, v=1) oder eine 10-Undecenylrest (Z = H, L' = n-C₉H₁₈, v=1).

Beispielsweise können als Alkoxyalkylsilan oder Alkylchlorsilan Vinyltrichlorsilan, Vinyltri-tert.-butoxysilan, Vinyltriacetoxysilan, Vinylphenylmethylmethoxysilan, Vinylphenylmethylchlorsilan, Vinylphenyldiethoxysilan, Vinyldiphenylchlorsilan, Vinyldimethylethoxysilan, Vinyldimethylchlorsilan, 1-Vinyl-3-(chlormethyl)-1,1,3,3-tetramethyldisiloxan, Vinyl(chlormethyl)dimethylsilan, Vinyldimethylethoxysilan, Vinyltris(methoxypropoxy)silan, Vinyltris(2-methoxyethoxy)silan, Vinyltrimethoxysilan, Vinyltriisopropoxysilan, Vinyltriethoxysilan, Vinylphenyldichlorsilan, Vinyloctyldichlorsilan, Vinylmethyldimethoxysilan, Vinylmethyldiethoxysilan, Vinylmethyldichlorsilan, Vinylmethyldiacetoxysilan, Vinyldiphenylethoxysilan, 5-Hexenyltrichlorsilan, 5-Hexenyldimethylchlorsilan, Docosenyltriethoxysilan, Butenyltriethoxysilan, Butenylmethyldichlorsilan, Allyltrimethoxysilan, Allyltriethoxysilan, Allyltrichlorsilan, Allyloxyundecyltrimethoxysilan, Allylmethyldichlorsilan, Allyldimethylchlorsilan, Allyl(chlormethyl)dimethylsilan, Hexenyltriethoxysilan, Vinyldiphenylethoxysilan, 10-Undecenyltrimethoxysilan, 10-Undecenyltrichlorsilan, 10-Undecenyldimethylchlorsilan, Styrylethyltrimethoxysilan, 7-Octenyltrimethoxysilan, 7-Octenyltrimethoxysilan, 7-Octenyldimethylchlorsilan, etc. verwendet werden.

Besonders bevorzugt handelt es sich beim Rest R um einen polymeren Rest mit Ether-, Ester- und/oder Urethangruppen.

Die polymeren Reste R enthaltenden Verbindungen (Q = -(L')ᵥ-R mit R = polymeren Rest mit Ether-, Ester- und/oder Urethangruppen) der obigen Formel weisen ebenfalls eine endständige monovinylfunktionelle Gruppe auf, beispielsweise eine Allyloxygruppe (Z = H, L' = CH₂O, v=1).

Im Falle des Vorhandenseins einer Allyloxygruppe (CH₂=CH-CH₂-O) und eines Polyether-Rests als Rest R spricht man von Allylpolyethern. Allylpolyether können durch die Alkoxylierung von Allylalkohol oder Monoallylethern mit einer oder mehreren Hydroxygruppen mit Alkylenoxiden, insbesondere Ethylenoxid und/oder Propylenoxid und/oder Butylenoxid und/oder Styroloxid, hergestellt werden.

Es können sowohl Reinalkoxylate als auch Mischalkoxylate hergestellt werden. Bei Mischalkoxylaten kann die Alkoxylierung blockweise, alternierend oder statistisch sein. Auch können die Mischalkoxylate einen Verteilungsgradienten in Bezug auf die Alkoxylierung enthalten.

Vorhandene endständige Hydroxylgruppen werden nach der Synthese blockiert oder verkappt. Dies kann beispielsweise durch Veretherung oder Veresterung oder durch Addition eines Monoisocyanats erfolgen. Vorzugsweise findet eine Methylierung oder Acetylierung statt.

Handelt es sich beim Rest R um einen Polyether-Rest, so ist dies vorzugsweise ein Polyether-Rest aus Ethylenoxid ([EO]), Propylenoxid ([PO]) oder einer Mischung aus Ethylenoxid und Propylenoxid. Es kann in einem solchen Fall durch die folgende Formel wiedergegeben werden:

R =-[EO]ⱼ-[PO]ₖ-R^{T}

mit j = 0 - 70; bei j = 0 ist k mindestens 1;
mit k = 0 - 50; bei k = 0 ist j mindestens 1;
wobei R^{T} eine aliphatische, aromatische oder araliphatische, hydroxylgruppenfreie Gruppe darstellt, beispielsweise eine Alkylgruppe, CO-Alkyl-Gruppe oder eine CO-NH-Alkylgruppe. Vorzugsweise enthält die Gruppe R^{T} 1 bis 10, besonders bevorzugt 1 bis 6 und ganz besonders bevorzugt 1 bis 4 Kohlenstoffatome.

Durch unterschiedliche Anteile an [EO]- und [PO]-Einheiten können die Eigenschaften des erfindungsgemäßen Polysiloxans beeinflusst werden. So kann speziell wegen der größeren Hydrophobie der [PO]-Einheiten im Vergleich zu den [EO]-Einheiten durch die Wahl geeigneter [EO]:[PO]-Verhältnisse die Hydrophobie der erfindungsgemäßen Polysiloxane gesteuert werden.

Bei den der oben angegebenen Strukturformel entsprechenden Polyether-Copolymeren kann es sich um statistische Copolymere, alternierende Copolymere oder um Blockcopolymere handeln. Auch kann durch die Abfolge der Alkylenoxideinheiten ein Gradient gebildet werden.

Es ist möglich, nicht nur einen Allylpolyether einzusetzen. Zur besseren Steuerung der Verträglichkeit können auch Mischungen unterschiedlicher Allylpolyether eingesetzt werden.

Im Falle des Vorhandenseins einer Allyloxygruppe (CH₂=CH-CH₂-O) und eines Polyester-Rests als Rest R spricht man von Allylpolyestern. Allylpolyester können durch die Veresterung von Alkoholen mit allylischer Doppelbindung (1-Alkenolen, wie z.B. 5-Hexen-1-ol, oder hydroxyfunktionelle Allylpolyethern, wie z.B. Ethylenglykolmonoallylether, Diethylglykolmonoallylether oder höhere Homologe) mit Hydroxycarbonsäuren oder deren Lactonen erhalten werden. Bevorzugt erfolgt die Veresterung über eine ringöffnende Polymerisation mit Propiolacton, Caprolacton, Valerolacton und/oder Dodecalacton. Auch können insbesondere methylsubstiuierte Derviate der Lactone eingesetzt werden. Besonders bevorzugt erfolgt die ringöffnende Polymerisation mit Caprolacton. Dabei können sowohl Reinpolyester als auch Mischpolyester hergestellt werden. Bei Mischpolyestern kann die Veresterung blockweise, alternierend oder statistisch sein. Auch können die Mischpolyester einen Verteilungsgradienten in Bezug auf die Veresterung enthalten.

Die Endgruppen des Allylpolyesters werden wie die der Allylpolyether blockiert oder verkappt, beispielsweise durch Acetylierung.

Die gewichtsmittleren Molekulargewichte der Allylpolyester liegen vorzugsweise zwischen 200 und 4000 g/mol, besonders bevorzugt zwischen 300 und 2000 g/mol und ganz besonders bevorzugt zwischen 400 und 1000 g/mol.

Es können auch gemischte Allyl(polyether)(polyester) hergestellt werden, indem beispielsweise an einem hydroxyfunktionellen Allylpolyether eine ringöffnende Lactonpolymerisation durchgeführt wird und anschließend die Hydroxylendgruppe blockiert oder verkappt wird. Selbstverständlich kann auch an einem Allylpolyester mit endständiger Hydroxylgruppe eine Alkoxylierung durchgeführt werden und anschließend eine Blockierung oder Verkappung. Die Kombinationsmöglichkeiten sind hier mannigfaltig.

Generell können die Verträglichkeiten der erfindungsgemäßen Polysiloxane auf unterschiedliche Weise angepasst werden. Um die erfindungsgemäßen Polysiloxane beispielsweise in Polyurethane enthaltenden Systeme einzusetzen, kann man in den erfindungsgemäßen Polysiloxanen entsprechende Urethangruppenhaltige polymere Reste R einbauen.

Polymere Reste wie beispielsweise Polyether-Reste, Polyester-Reste, Polyurethan-Reste oder polymere Reste, die Ether, Ester und/oder Urethangruppen enthalten können auch durch Kondensationsreaktion in die Si-H-funktionellen Polysiloxane eingebaut werden. Beim Einbau durch Kondensationsreaktion wird üblicherweise von monohydroxyfunktionellen, vorzugsweise linearen, polymeren Komponenten, die Ether, Ester und/oder Urethangruppen aufweisen ausgegangen. Diese können analog den obengenannten Allylpolyethern durch Alkoxylierung von Monoalkoholen beziehungsweise analog den Allylpolyestern durch ringöffnende Polymerisation von Lactonen an Monoalkoholen synthetisiert werden. Als Monoalkohole können beispielsweise Methanol, Ethanol, Butanol oder Allylalkohol, oder andere Starteralkohole, beispielsweise Fettalkohole, dienen.

### Bevorzugte erfindungsgemäße Polysiloxane

Bevorzugter Gegenstand der Erfindung sind Polysiloxane, die sich mit der folgenden allgemeinen Formel (IV) beschreiben lassen: 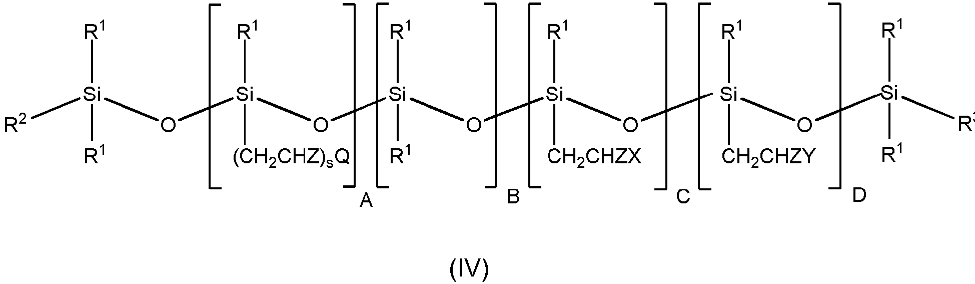 wobei
X, Y, Z und Q wie oben definiert sind, s = 0 oder 1 ist;
R¹ unabhängig voneinander für C₁-C₁₄-Alkyl, C₆-C₁₀-Aryl oder C₇-C₁₂-Aralkyl stehen;
R² und R³ unabhängig voneinander für CH₂CHZX, CH₂CHZY oder (CH₂CHZ)ₛQ, oder für -(R⁴)ᵢ-C₁-C₁₄-Alkyl,
-(R⁴)ᵢ-C₆-C₁₄-Aryl oder -(R⁴)ᵢ-C₇-C₁₄-Aralkyl stehen, worin i = 0 oder 1 ist und R⁴ für O, O-CO, O-CO-O oder -OSO₂- steht;
A = 0 - 20, bevorzugt 0-15, besonders bevorzugt 0-8 ist,
B = 2 - 300, bevorzugt 10 - 200, besonders bevorzugt 15 - 100, ganz besonders bevorzugt 50 bis 100 wie beispielweise 65 bis 100 ist,
C = 0 - 20, bevorzugt 1 - 15, besonders bevorzugt 1 - 8, ganz besonders bevorzugt 1 bis 6 ist; und
D = 0 - 20, bevorzugt 1 - 15, besonders bevorzugt 1 - 8, ganz besonders bevorzugt 3 bis 8 ist;
wobei für C = 0 gilt, dass R² = X und/oder R³ = X ist, und
wobei für D = 0 gilt, dass R² = Y und/oder R³ = Y ist.

Wenn die Einheit -[SiR¹(CH₂CHZX)-O-]- vorhanden ist, das heißt C mindestens 1 ist, so ist es möglich, dass R² und R³ verschieden von CH₂CHZX sind.

Und wenn die Einheit -[SiR¹(CH₂CHZY)-O-]- vorhanden ist, das heißt D mindestens 1 ist, so ist es möglich, dass R² und R³ verschieden von CH₂CHZY sind.

Bei den der oben angegebenen Strukturformel entsprechenden Copolymeren kann es sich um statistische Copolymere, alternierende Copolymere oder um Blockcopolymere handeln. Auch kann durch die Abfolge der Seitenketten entlang dem Silikonrückgrat ein Gradient gebildet werden. Das heißt, die A Einheiten der Formel - [SiR¹((CH₂CHZ)ᵣQ)-O-]-, die B Einheiten -Si(R¹)₂-O-, die C Einheiten -[SiR¹(CH₂CHZX)-O-]- und die D Einheiten -[SiR¹(CH₂CHZY)-O-]- können in der Polysiloxankette in beliebiger Reihenfolge angeordnet sein.

Die erfindungsgemäß bevorzugten Polysiloxane enthalten, wie aus den Definitionen für A, B, C und D gefolgert werden kann, 6 bis 763 Siloxaneinheiten, wobei die Siloxaneinheiten in der Hauptkette und den Seitenketten berücksichtigt werden. Vorzugsweise enthalten die erfindungsgemäß bevorzugten Polysiloxane 10 bis 500 Siloxaneinheiten, noch bevorzugter aus 20 bis 250 Siloxaneinheiten, und ganz besonders bevorzugt aus 50 bis 200 Siloxaneinheiten und insbesondere 100 bis 180 Siloxaneinheiten.

### Verfahren zur Herstellung der erfindungsgemäßen Polysiloxane

Die Reaktionsführung kann so erfolgen, dass mindestens eine epoxyfunktionelle, monovinylfunktionelle Komponente, mindestens ein monovinylfunktionelles Polysiloxan und gegebenenfalls mindestens eine von vorgenannten Spezies verschiedene monovinylfunktionelle Komponente, wie sie oben definiert ist, als Mischung der Komponenten oder in beliebiger Reihenfolge an das Si-H-funktionelle Polysiloxan addiert werden, insbesondere durch Hydrosilylierung.

Als Hydrosilylierungskatalysator werden bevorzugt Edelmetalle deren Verbindungen wie Platin, Rhodium, und Palladium und deren Verbindungen, besonders bevorzugt Platin-Verbindungen eingesetzt. Speziell bevorzugte Platinverbindungen sind Hexachloroplatinsäure, alkoholische Lösungen der Hexachloroplatinsäure, Komplexe mit Platin und aliphatischen ungesättigten Kohlenwasserstoffverbindungen und Platin-Vinylsiloxan-Komplexe. Es kann jedoch auch Platinschwarz und Platin auf Aktivkohle eingesetzt werden. Wenn Beispielhaft eine Platinverbindung eingesetzt wird, werden vorzugsweise 1 bis 50 ppm als Platinmetall zugesetzt.

Typischerweise erfolgt die Hydrosilylierung unter den folgenden Bedingungen: Das SiH-funktionelle Polysiloxan wird bei Raumtemperatur vorgelegt. Unter einer Stickstoffatmosphäre wird dann der Reaktorinhalt beispielsweise auf 85°C bis 140°C erwärmt. Ein Hydrosilylierungkatalysator, wie z.B. Karstedt-Katalysator oder einer der anderen oben genannten Katalysatoren, wird zugesetzt. Abhängig von der zu erwartenden Exothermie der Reaktion wird ein Teil oder die Gesamtmenge der monovinylfunktionellen Komponenten zugegeben. Durch die dann ablaufende exotherme Reaktion steigt die Temperatur. Normalerweise wird versucht, die Temperatur in einem Bereich von 90°C bis 120°C zu halten. Falls ein Teil der monovinylfunktionellen Komponenten noch zudosiert werden muss, erfolgt die Zugabe in der Art, das die Temperatur im Bereich von 90°C bis 120°C bleibt. Nach vollständiger Zugabe wird die Temperatur noch für einige Zeit bei 90°C bis 120°C gehalten. Der Ablauf der Reaktion kann durch eine gasvolumetrische Bestimmung der verbleibenden SiH-Gruppen oder durch Infrarot-Spektroskopie (Absorptionsbande des Siliciumhydrids bei 2150 cm⁻¹) verfolgt werden. Falls erforderlich kann ein alkoholischer Gelierungsinhibitor wie beschrieben in US 5,512,640 zugesetzt werden. Die erfindungsgemäßen Polysiloxane enthalten vorzugsweise keine Si-H-Gruppen.

Werden Komponenten über Kondensationsreaktionen eingeführt, beispielsweise monohydroxyfunktionelle Komponenten durch Kondensation mit einer SiH-Gruppe im SiH-funktionellen Polysiloxan, so werden die Kondensationsreaktionen vor den Hydrosilylierungsreaktionen durchgeführt.

Die erfindungsgemäßen Polysiloxane können auch als Zwischenstufen zur Herstellung von weiter modifizierten Additiven dienen. So können die erfindungsgemäßen Polysiloxane nachträglich noch komplett oder teilweise chemisch modifiziert werden, um beispielsweise bestimmte neue Reaktivgruppen einzuführen. Durch zumindest teilweise Reaktion der Epoxygruppen, beispielsweise mit Acrylsäure können Produkte erhalten werden, die sich auch in strahlenhärtenden Zusammensetzungen, wie UV- und Elektronenstrahlhärtenden Zusammensetzungen, einsetzen lassen und dabei fest in die entsprechende Zusammensetzung, beispielsweise einen strahlenhärtenden Lack, einbauen lassen.

Die erfindungsgemäßen Polysiloxane können beispielweise in Epoxidsystemen, Epoxid-Siloxan-Systemen, Polyestersystemen und auch in Systemen die unter Einwirkung von UV/EB-Strahlung in Gegenwart von schwach sauren Donatoren und anderen vernetzen, verwendet werden.

### Erfindungsgemäße Beschichtungsmittel, Polymere Formmassen und Thermoplaste

Gegenstand der Erfindung sind weiterhin die erfindungsgemäßen Polysiloxane enthaltende Zusammensetzungen wie insbesondere Beschichtungsmittel, polymeren Formmassen oder Thermoplaste. Besonders bevorzugte erfindungsgemäße Zusammensetzungen sind solche, die Epoxidharze enthalten.

Die mit den erfindungsgemäßen Polysiloxanen hergestellten Beschichtungsmittel, polymeren Formmassen oder Thermoplaste können pigmentiert oder unpigmentiert eingesetzt werden, außerdem können die Beschichtungsmittel, polymeren Formmassen und Thermoplaste Füllstoffe wie Calciumcarbonat, Aluminiumhydroxid, verstärkende Fasern wie Glasfasern, C-Fasern und Aramidfasern enthalten. Des Weiteren können die mit den erfindungsgemäßen Polysiloxanen hergestellten Beschichtungsmittel, polymeren Formmassen oder Thermoplaste andere übliche Additive enthalten, wie beispielsweise Netz- und Dispergiermittel, Lichtschutzmittel, Alterungsschutzmittel und dergleichen.

Die mit den erfindungsgemäßen Polysiloxanen hergestellten Beschichtungsmittel enthalten bevorzugt mindestens ein weiteres von diesen verschiedenes Bindemittel.

Die erfindungsgemäßen Beschichtungsmittelzusammensetzungen sind vorzugsweise geeignet für Anti-Graffiti-Beschichtungen, Trennbeschichtungen, selbstreinigende Fassadenbeschichtungen, Vereisung verhinderende Beschichtungen, eisabweisenden Beschichtungen, insbesondere für Flugzeuge, schmutzabweisende Beschichtungen für Autokarosserien oder Leichtmetallfelgen, schmutzabweisende Maschinen- und Geräte-Beschichtungen, schmutzabweisende Möbelbeschichtungen oder Schiffsbeschichtungen wie beispielsweise Anti-Fouling-Beschichtungen sowie schmutzabweisenden Möbel- und Trennpapier-Beschichtungen.

Die erfindungsgemäßen Beschichtungsmittel, polymeren Formmassen oder Thermoplasten, enthalten die erfindungsgemäßen Polysiloxane als Additiv in Mengen von 0,1 bis 10 Gew.-%, bevorzugt von 0,5 bis 7,5 Gew.-%, ganz besonders bevorzugt von 1 bis 5 Gew.-% bezogen auf das Gesamtgewicht des Beschichtungsmittels, der polymeren Formmasse oder des Thermoplasten.

Die mit den erfindungsgemäßen Polysiloxanen hergestellten Beschichtungsmittel können auf einer Vielzahl von Substraten aufgebracht werden, wie beispielsweise Holz, Papier, Glas, Keramik, Putz, Beton und Metall. Die Beschichtungen können auch im Mehrschichtverfahren auf Grundierungen, Füller oder Basislacken aufgebracht werden. Die Aushärtung der Beschichtungsmittel ist abhängig von der jeweiligen Art der Vernetzung und kann im weiten Temperaturbereich von beispielsweise -10°C bis 250°C erfolgen. Überraschenderweise zeigen mit den erfindungsgemäßen Polysiloxanen hergestellten Beschichtungsmittel auch bei Aushärtung bei Raumtemperatur sehr gute anti-adhäsive schmutzabweisende Eigenschaften.

Bei den mit den erfindungsgemäßen Polysiloxanen hergestellten polymeren Formmassen handelt es sich vorzugsweise um Lackharze, Polyesterharze, Epoxidharze, Silikonharze, Epoxysilikonharze, Polyurethanharze oder Mischungen aus diesen Polymeren.

Aufgrund der außerordentlich guten antiadhäsiven Wirkung der aus den erfindungsgemäßen Beschichtungsmitteln erhaltenen Beschichtungen können selbst ölige Substanzen wie Mineralöle, Pflanzenöle oder ölige Zubereitungen abgewiesen werden, so dass damit beschichtete Behälter vollständig entleerbar sind. Dementsprechend sind erfindungsgemäß additivierte Beschichtungsmittelzusammensetzungen hervorragend als Innenbeschichtungsmittel zur Beschichtung von Fässern, Kanistern oder Dosen geeignet.

Aufgrund der überragenden Kompatibilität der verzweigten erfindungsgemäßen Polyalkoxysiloxane mit verschiedenen Lacksystemen sind diese hervorragend zur Herstellung transparenter Beschichtungen geeignet.

Gegenstand der Erfindung ist auch ein Verfahren zur Beschichtung eines Substrats gewählt aus den Materialien Metall, Glas, Keramik und Kunststoff, wobei eine erfindungsgemäße Beschichtungsmittelzusammensetzung auf das Substrat aufgebracht wird, durch physikalische Trocknung, durch reaktive Selbstvernetzung oder reaktive Fremdvernetzung vernetzt wird. Vorzugsweise erfolgt eine thermische Vernetzung bei einer Temperatur > 100 °C. Weiterer Gegenstand der Erfindung ist die so erhaltene gehärtete Beschichtung. In einer besonderen Ausführungsform der Erfindung erfolgt in der Beschichtung, eine zumindest teilweise hydrolytische Vernetzung, wenn die erfindungsgemäßen Polysiloxane hydrolysierbare Silangruppen enthalten, wobei sich an der Beschichtungsoberfläche ein Kieselsäurenetzwerk bildet.

Gehärtete Beschichtungen sind in der Regel duroplastisch und unterscheiden sich daher beispielsweise von thermoplastischen Materialen drastisch.

Durch Anwendung der erfindungsgemäßen Beschichtungsmittel ist es möglich, die Selbstreinigungseigenschaften der Oberflächen merklich zu verbessern. Ein weiterer Vorteil ist, dass andere Eigenschaften derartiger Hybridbeschichtungen, wie beispielsweise der Verlauf, der Glanz, die Transparenz und Flexibilität nicht negativ beeinflusst werden, und teilweise vorgenannte Eigenschaften sogar verbessert werden.

Gegenstand der vorliegenden Erfindung ist daher auch die Verwendung der erfindungsgemäßen Polysiloxane als Additive zu Verbesserung der antiadhäsiven Eigenschaften von Beschichtungsmittel, polymeren Formmassen und Thermoplasten, insbesondere die Verwendung als Additiv zur Ausrüstung von Oberflächen mit schmutzabweisenden und/oder selbstreinigenden Eigenschaften. Das Additiv wird in den oben für Beschichtungsmittel, polymeren Formmassen und Thermoplasten angegebenen Mengen verwendet.

Im Folgenden soll die Erfindung anhand von Beispielen illustriert werden.

### SYNTHESE-BEISPIELE

### Gelpermeationschromatographie (GPC)

Die Gelpermeationschromatographie wurde bei 40 °C unter Verwendung einer HPLC-Pumpe (Bischoff HPLC 2200) und eines Brechungsindexdetektors (Waters 419) durchgeführt. Als Eluent wurde Tetrahydrofuran verwendet und die Elutionsrate betrug 1 ml/min. Zur Kalibrierung wurden Polystyrenstandards verwendet. Das zahlenmittlere Molekulargewicht Mₙ, das gewichtsmittlere Molekulargewicht M_{w}, das zentrifugenmittlere Molekulargewicht M_{z} und die Polydispersität (=M_{w}/Mₙ) wurden unter Verwendung der Software NTeqGPC ermittelt.

### Abkürzungen

- M: = -O_{0,5}Si(CH₃)₃
- M^{H}: = -O_{0,5}SiH(CH₃)₂
- M^{Butyl}: = -O_{0,5}Si(Butyl)(CH₃)₂
- D: = -O_{0,5}Si(CH₃)₂O_{0,5}-
- D^{H}: = -O_{0,5}SiH(CH₃)O_{0,5}-
- D^{R'}: = -O_{0,5}SiR'(CH₃)O_{0,5}-
- D^{R"}: = -O_{0,5}SiR"(CH₃)O_{0,5}-
- D^{R"'}: = -O_{0,5}SiR"'(CH₃)O_{0,5}-
- M^{CH=CH2}: = -O_{0,5}Si(CH=CH₂)(CH₃)₂

### Synthese monovinylfunktioneller Polysiloxane der folgenden Formeln: M^{Butyl}D₂₅M^{CH=CH2}, M^{Butyl}D₄₀M^{CH=CH2} und M^{Butyl}D₆₆M^{CH=CH2}

Monovinylterminierte Polydimethylsiloxane besitzen ein durchschnittliches Molekulargewicht von 2000, 3000, 5000 und werden hergestellt analog Beispiel 1a (1. Stufe) der Patentschrift DE 10 2008 031 901 A1 hergestellt mit dem Unterschied, dass die Endfunktionalisierung mit Chlordimethylvinylsilan anstatt Chlordimethylsilan durchgeführt wurde.

### Beispiel 1

Umsetzung eines Methyl-Wasserstoff-Polysiloxans mit der mittleren Durchschnittsformel MD^{H}₈D₉₁M mit M^{Butyl}D₂₅M^{CH=CH2} und Allylglycidether

In einem 250-ml-3-Halskolben mit Rührer, Thermometer, Rückflusskühler werden bei Raumtemperatur 80,57 g eines Methyl-Wasserstoff-Polysiloxans mit der mittleren Durchschnittsformel MD^{H}₈D₉₁M und 37,47 g eines monovinylfunktionellen Polysiloxans mit der Durchschnittsformel M^{Butyl}D₂₅M^{CH=CH2} vorgelegt und unter Stickstoffatmosphäre auf 75°C erwärmt. Bei Erreichen dieser Temperatur werden 0,26 g Karstedt-Katalysator 0,2% in Xylol zugegeben. Durch die bei der Umsetzung frei werdende Wärmemenge erhöht sich die Temperatur auf 103°C. Nach 30 Minuten bei 100°C wird eine gasvolumetrische Bestimmung der verbleibenden Si-H-Gruppen durchgeführt und der theoretische Umsatz von 20 mol% gefunden. Es werden für die 2. Reaktionsstufe 0,03 g Karstedt-Katalysator 0,2% in Xylol zugegeben und anschließend innerhalb 10 min 11,96 Allylglycidylether zudosiert, die Temperatur erhöht sich bis auf 106°C. Nach 60 min Nachreaktion bei 100°C zeigt die gasvolumetrische Bestimmung der verbleibenden Si-H-Gruppen eine vollständige Umsetzung. In der nachfolgenden Destillation werden in einem Vakuum von etwa 20 mbar bei 130°C in einer Stunde alle flüchtigen Bestandteile abdestilliert. Man erhält ein hellbraunes, klares, viskoses Produkt.

Durchschnittsstruktur: MD^{R'}ₓD^{R"}_{y}D₉₁M

| | | |
|---|---|---|
| R' = | 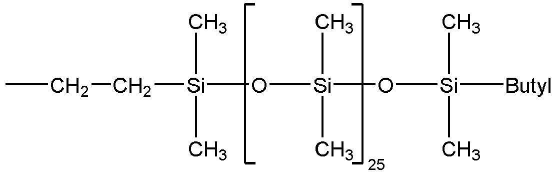 | x= 1,6 |
| R" = | 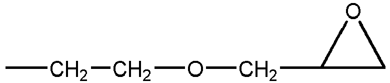 | y = 6,4 |

Es werden folgende GPC-Daten für das Produkt gefunden:
M_{W}: 18124 g/mol, M_{Z}: 33679 g/mol, Mₙ: 3299 g/mol, Polydispersität: 5,33

### Beispiel 2

Umsetzung eines Methyl-Wasserstoff-Polysiloxans mit der mittleren Durchschnittsformel MD^{H}₉D₇₆M mit M^{Butyl}D₂₅M^{CH=CH2} und Allylglycidether
In einem 250-ml-3-Halskolben mit Rührer, Thermometer, Rückflusskühler werden bei Raumtemperatur 73,49 g eines Methyl-Wasserstoff-Polysiloxans mit der mittleren Durchschnittsformel MD^{H}₉D₇₆M und 42,84 g eines monovinylfunktionellen Polysiloxans mit der Durchschnittsformel M^{Butyl}D₂₅M^{CH=CH2} vorgelegt und unter Stickstoffatmosphäre auf 75°C erwärmt. Bei Erreichen dieser Temperatur werden 0,26 g Karstedt-Katalysator 0,2% in Xylol zugegeben. Durch die bei der Umsetzung frei werdende Wärmemenge erhöht sich die Temperatur auf 104°C. Nach 30 Minuten bei 100°C wird eine gasvolumetrische Bestimmung der verbleibenden Si-H-Gruppen durchgeführt und der theoretische Umsatz von 20 mol% gefunden. Es werden für die 2. Reaktionsstufe 0,03 g Karstedt-Katalysator 0,2% in Xylol zugegeben und anschließend innerhalb 10 min 13,67 g Allylglycidylether zudosiert, die Temperatur erhöht sich bis auf 106°C. Nach 60 min Nachreaktion bei 100°C zeigt die gasvolumetrische Bestimmung der verbleibenden Si-H-Gruppen eine vollständige Umsetzung. In der nachfolgenden Destillation werden in einem Vakuum von etwa 20 mbar bei 130°C in einer Stunde alle flüchtigen Bestandteile abdestilliert. Man erhält ein hellbraunes, klares, viskoses Produkt.

Durchschnittsstruktur: MD^{R'}ₓD^{R"}_{y}D₇₆M

| | | |
|---|---|---|
| R' = | 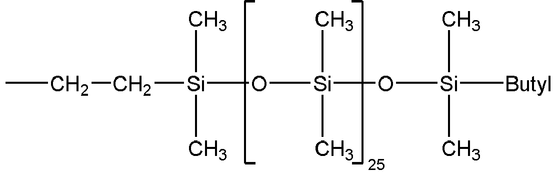 | x= 1,8 |
| R" = | 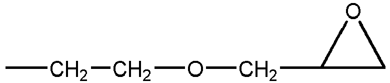 | y = 7,2 |

Es werden folgende GPC-Daten für das Produkt gefunden:
M_{W}: 19210 g/mol, M_{Z}: 37623 g/mol, Mₙ: 3743 g/mol, Polydispersität: 5,13

### Beispiel 3 (Vergleich) (ohne monovinylfunktionelles Polysiloxan)

Umsetzung eines Methyl-Wasserstoff-Polysiloxans mit der mittleren Durchschnittsformel MD^{H}_{9,5}D₁₅₃M mit Allylglycidether

In einem 250-ml-3-Halskolben mit Rührer, Thermometer, Rückflusskühler werden bei Raumtemperatur 134,27 g eines Methyl-Wasserstoff-Polysiloxans mit der mittleren Durchschnittsformel MD^{H}_{9,5}D₁₅₃M unter Stickstoffatmosphäre auf 75°C erwärmt. Bei Erreichen dieser Temperatur werden 0,33 g Karstedt-Katalysator 0,2% in Xylol zugegeben, anschließend innerhalb 10 min 16,73 g Allylglycidylether zudosiert, die Temperatur erhöht sich bis auf 108°C. Nach 60 min Nachreaktion bei 100°C zeigt die gasvolumetrische Bestimmung der verbleibenden Si-H-Gruppen eine vollständige Umsetzung. In der nachfolgenden Destillation werden in einem Vakuum von etwa 20 mbar bei 130°C in einer Stunde alle flüchtigen Bestandteile abdestilliert. Man erhält ein hellbraunes, klares, viskoses Produkt.

Durchschnittsstruktur: MD₁₅₃D^{R"}_{9,5}M mit

| | | |
|---|---|---|
| R" = | 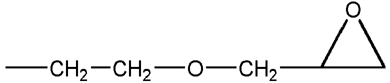 | y= 9,5 |

Es werden folgende GPC-Daten für das Produkt gefunden:
M_{W}: 20683 g/mol, M_{Z}: 37697 g/mol, Mₙ: 2571 g/mol , Polydispersität: 8,04

### Beispiel 4 (Vergleich) (ohne monovinylfunktionelles Polysiloxan)

Umsetzung eines Methyl-Wasserstoff-Polysiloxans mit der mittleren Durchschnittsformel MD^{H}₈D₉₁M mit Allylglycidether

In einem 250-ml-3-Halskolben mit Rührer, Thermometer, Rückflusskühler werden bei Raumtemperatur 127,62 g eines Methyl-Wasserstoff-Polysiloxans mit der mittleren Durchschnittsformel MD^{H}₈D₉₁M unter Stickstoffatmosphäre auf 80°C erwärmt. Bei Erreichen dieser Temperatur werden 0,33 g Karstedt-Katalysator 0,2% in Xylol zugegeben, anschließend innerhalb 10 min 22,38 g Allylglycidylether zudosiert, die Temperatur erhöht sich bis auf 105°C. Nach 60 min Nachreaktion bei 100°C zeigt die gasvolumetrische Bestimmung der verbleibenden Si-H-Gruppen eine vollständige Umsetzung. In der nachfolgenden Destillation werden in einem Vakuum von etwa 20 mbar bei 130°C in einer Stunde alle flüchtigen Bestandteile abdestilliert. Man erhält ein hellbraunes, klares, viskoses Produkt.

Durchschnittsstruktur: MD₉₁D^{R"}₈M

| | | |
|---|---|---|
| R" = | 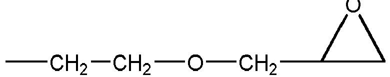 | Y= 8,0 |

Es werden folgende GPC-Daten für das Produkt gefunden:
M_{W}: 13181 g/mol, M_{Z}: 23552 g/mol, Mₙ: 2418 g/mol , Polydispersität: 5,44

### Beispiel 5

Umsetzung eines Methyl-Wasserstoff-Polysiloxans mit der mittleren Durchschnittsformel MD^{H}₈D₉₁M mit M^{Butyl}D₄₀M^{CH=CH2} und Allylglycidether

In einem 250-ml-3-Halskolben mit Rührer, Thermometer, Rückflusskühler werden bei Raumtemperatur 88,79 g eines Methyl-Wasserstoff-Polysiloxans mit der mittleren Durchschnittsformel MD^{H}₈D₉₁M und 47,23 g eines monovinylfunktionellen Polysiloxans mit der Durchschnittsformel M^{Butyl}D₄₀M^{CH=CH2} vorgelegt und unter Stickstoffatmosphäre auf 75°C erwärmt. Bei Erreichen dieser Temperatur werden 0,30 g Karstedt-Katalysator 0,2% in Xylol zugegeben. Durch die bei der Umsetzung frei werdende Wärmemenge erhöht sich die Temperatur auf 103°C. Nach 30 Minuten bei 100°C wird eine gasvolumetrische Bestimmung der verbleibenden Si-H-Gruppen durchgeführt und der theoretische Umsatz von 13,3 mol% gefunden. Es werden für die 2. Reaktionsstufe 0,03 g Karstedt-Katalysator 0,2% in Xylol zugegeben und anschließend innerhalb 10 min 13,98 g Allylglycidylether zudosiert, die Temperatur erhöht sich bis auf 106°C. Nach 60 min Nachreaktion bei 100°C zeigt die gasvolumetrische Bestimmung der verbleibenden Si-H-Gruppen eine vollständige Umsetzung. In der nachfolgenden Destillation werden in einem Vakuum von etwa 20 mbar bei 130°C in einer Stunde alle flüchtigen Bestandteile abdestilliert. Man erhält ein hellbraunes, klares, viskoses Produkt.

Durchschnittsstruktur: MD^{R'}ₓD^{R"}_{y}D₉₁M

| | | |
|---|---|---|
| R' = | 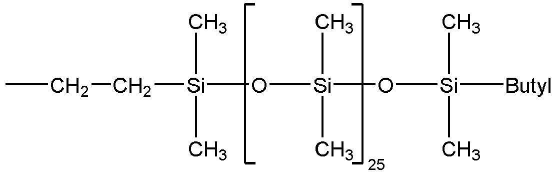 | x= 1,06 |
| R" = | 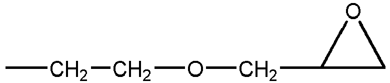 | y= 6,94 |

Es werden folgende GPC-Daten für das Produkt gefunden:
M_{W}: 17064 g/mol, M_{Z}: 31429 g/mol, Mₙ: 3166 g/mol, Polydispersität: 5,39

### Beispiel 6

Umsetzung eines Methyl-Wasserstoff-Polysiloxans mit der mittleren Durchschnittsformel MD^{H}₉D₇₆M mit M^{Butyl}D₄₀M^{CH=CH2} und Allylglycidether

In einem 250-ml-3-Halskolben mit Rührer, Thermometer, Rückflusskühler werden bei Raumtemperatur 68,53 g eines Methyl-Wasserstoff-Polysiloxans mit der mittleren Durchschnittsformel MD^{H}₉D₇₆M und 68,72 g eines monovinylfunktionellen Polysiloxans mit der Durchschnittsformel M^{Butyl}D₄₀M^{CH=CH2} vorgelegt und unter Stickstoffatmosphäre auf 75°C erwärmt. Bei Erreichen dieser Temperatur werden 0,30 g Karstedt-Katalysator 0,2% in Xylol zugegeben. Durch die bei der Umsetzung frei werdende Wärmemenge erhöht sich die Temperatur auf 102°C. Nach 30 Minuten bei 100°C wird eine gasvolumetrische Bestimmung der verbleibenden Si-H-Gruppen durchgeführt und der theoretische Umsatz von 20 mol% gefunden. Es werden für die 2. Reaktionsstufe 0,03 g Karstedt-Katalysator 0,2% in Xylol zugegeben und anschließend innerhalb 10 min 12,75 g Allylglycidylether zudosiert, die Temperatur erhöht sich bis auf 106°C. Nach 60 min Nachreaktion bei 100°C zeigt die gasvolumetrische Bestimmung der verbleibenden Si-H-Gruppen eine vollständige Umsetzung. In der nachfolgenden Destillation werden in einem Vakuum von etwa 20 mbar bei 130°C in einer Stunde alle flüchtigen Bestandteile abdestilliert. Man erhält ein hellbraunes, klares, viskoses Produkt

Durchschnittsstruktur: MD^{R'}ₓD^{R"}_{y}D₇₆M

| | | |
|---|---|---|
| R' = | 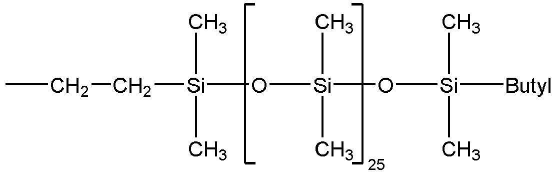 | x= 1,8 |
| R" = | 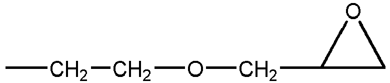 | y= 7,2 |

Es werden folgende GPC-Daten für das Produkt gefunden:
M_{W}: 20259 g/mol, M_{Z}:39641 g/mol, Mₙ:4103 g/mol , Polydispersität: 4,93

### Beispiel 7

Umsetzung eines Methyl-Wasserstoff-Polysiloxans mit der mittleren Durchschnittsformel MD^{H}₈D₉₁M mit M^{Butyl}D₆₆M^{CH=CH2} und Allylglycidether

In einem 250-ml-3-Halskolben mit Rührer, Thermometer, Rückflusskühler werden bei Raumtemperatur 91,73 g eines Methyl-Wasserstoff-Polysiloxans mit der mittleren Durchschnittsformel MD^{H}₈D₉₁M und 43,17 g eines monovinylfunktionellen Polysiloxans mit der Durchschnittsformel M^{Butyl}D₆₆M^{CH=CH2} mit 57,98 Xylol vorgelegt und unter Stickstoffatmosphäre auf 75°C erwärmt. Bei Erreichen dieser Temperatur werden 0,30 g Karstedt-Katalysator 0,2% in Xylol zugegeben. Durch die bei der Umsetzung frei werdende Wärmemenge erhöht sich die Temperatur auf 101°C.

Nach 30 Minuten bei 100°C wird eine gasvolumetrische Bestimmung der verbleibenden Si-H-Gruppen durchgeführt und der theoretische Umsatz von 8 mol% gefunden. Bei 100°C und 45 mbar werden mit einem Wasserabscheider innerhalb 20 min 50,1 g Xylol abdestilliert. Das Vakuum wird durch Einleiten von Stickstoff aufgehoben. Es werden für die 2. Reaktionsstufe 0,03 g Karstedt-Katalysator 0,2% in Xylol zugegeben und anschließend innerhalb 10 min 15,1 g Allylglycidylether zudosiert, die Temperatur erhöht sich bis auf 107°C. Nach 60 min Nachreaktion bei 100°C zeigt die gasvolumetrische Bestimmung der verbleibenden Si-H-Gruppen eine vollständige Umsetzung. In der nachfolgenden Destillation werden in einem Vakuum von etwa 20 mbar bei 130°C in einer Stunde alle flüchtigen Bestandteile abdestilliert. Man erhält ein hellbraunes, klares, viskoses Produkt

Durchschnittsstruktur: MD^{R'}ₓD^{R"}_{y}D₉₁M

| | | |
|---|---|---|
| R' = | 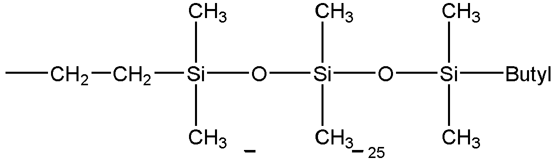 | x= 0,64 |
| R" = | 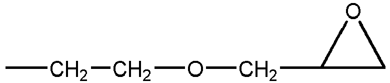 | y =7,36 |

Es werden folgende GPC-Daten für das Produkt gefunden:
M_{W}: 19450 g/mol, Mₙ: 4287 g/mol , Polydispersität: 4,53

### Beispiel 8

Umsetzung eines Methyl-Wasserstoff-Polysiloxans mit der mittleren Durchschnittsformel MD^{H}₂₄D₇₆M mit M^{Butyl}D₄₀M^{CH=CH2}, Allylpolyether mit der Durchschnittsformel CH₂=CH-CH₂O(CH₂-CH₂O)₆-CH₃ und Allylglycidether

In einem 250-ml-3-Halskolben mit Rührer, Thermometer, Rückflusskühler werden bei Raumtemperatur 38,17 g eines Methyl-Wasserstoff-Polysiloxans mit der mittleren Durchschnittsformel MD^{H}₂₄D₇₆M und 55,39 g eines monovinylfunktionellen Polysiloxans mit der Durchschnittsformel M^{Butyl}D₄₀M^{CH=CH2} vorgelegt und unter Stickstoffatmosphäre auf 75°C erwärmt. Bei Erreichen dieser Temperatur werden 0,21 g Karstedt-Katalysator 0,2% in Xylol zugegeben. Durch die bei der Umsetzung frei werdende Wärmemenge erhöht sich die Temperatur auf 100°C. Nach 30 Minuten bei 100°C wird eine gasvolumetrische Bestimmung der verbleibenden Si-H-Gruppen durchgeführt und der theoretische Umsatz von 20 mol% gefunden. Es werden für die 2. Reaktionsstufe 0,17 g Karstedt-Katalysator 0,2% in Xylol sowie 51,93 g Xylol zugegeben und anschließend innerhalb 10 min 27,6 g Allylpolyether mit der Durchschnittsformel CH₂=CH-CH₂O(CH₂-CH₂O)₆-CH₃ zudosiert, die Temperatur erhöht sich bis auf 101°C. Nach 60 min Nachreaktion bei 100°C zeigt die gasvolumetrische Bestimmung der verbleibenden Si-H-Gruppen eine weitere Umsetzung von 55 mol%. Es werden für die 3. Reaktionsstufe 0,03 g Karstedt-Katalysator 0,2% in Xylol sowie 3,79 g Xylol zugegeben und anschließend innerhalb 10 min 8,84 g Allylglycidylether zudosiert, die Temperatur erhöht sich bis auf 102°C. Nach 60 min Nachreaktion bei 100°C zeigt die gasvolumetrische Bestimmung der verbleibenden Si-H-Gruppen eine vollständige Umsetzung. In der nachfolgenden Destillation werden in einem Vakuum von etwa 20 mbar bei 130°C in einer Stunde alle flüchtigen Bestandteile abdestilliert. Man erhält ein hellbraunes, klares, viskoses Produkt.

Durchschnittsstruktur: MD^{R'}ₓD^{R"}_{y}D^{R"'}_{z}D₇₆M

| | | |
|---|---|---|
| R' = | 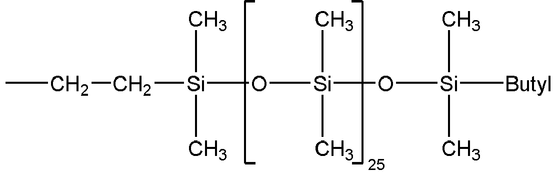 | x= 4,8 |
| R" = | 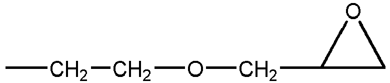 | y = 13,2 |
| R"' = | -CH₂-CH₂-CH₂O(CH₂-CH₂O)₆-CH₃ | z = 6 |

Es werden folgende GPC-Daten für das Produkt gefunden:
M_{W}: 28041 g/mol, Mₙ: 3335 g/mol , Polydispersität: 8,40

### Beispiel 9

Umsetzung eines Methyl-Wasserstoff-Polysiloxans mit der mittleren Durchschnittsformel MD^{H}₉D₇₆M mit M^{Butyl}D₆₆M^{CH=CH2}, Allylglycidether und Vinyltrimethoxysilan.

In einem 250-ml-3-Halskolben mit Rührer, Thermometer, Rückflußkühler werden bei Raumtemperatur 67,45 g eines Methyl-Wasserstoff-Polysiloxans mit der mittleren Durchschnittsformel MD^{H}₉D₇₆M und 67,62 g eines monovinylfunktionellen Polysiloxans mit der Durchschnittsformel M^{Butyl}D₆₆M^{CH=CH2} vorgelegt und unter Stickstoffatmosphäre auf 75°C erwärmt. Bei Erreichen dieser Temperatur werden 0,30 g Karstedt-Katalysator 0,2% in Xylol zugegeben. Durch die bei der Umsetzung frei werdende Wärmemenge erhöht sich die Temperatur auf 102°C. Nach 30 Minuten bei 100°C wird eine gasvolumetrische Bestimmung der verbleibenden Si-H-Gruppen durchgeführt und der theoretische Umsatz von 20 mol% gefunden. Es werden für die 2. Reaktionsstufe 0,02 g Karstedt-Katalysator 0,2% in Xylol zugegeben und anschließend innerhalb 5 min 4,56 g Allylglycidylether zudosiert. Die Temperatur erhöht sich bis auf 110°C. Nach 15 min Nachreaktion bei 100°C zeigt die gasvolumetrische Bestimmung der verbleibenden Si-H-Gruppen eine Umsetzung von weiteren 40 mol% Es werden für die 3. Reaktionsstufe 0,01 g Karstedt-Katalysator 0,2% in Xylol sowie zugegeben und anschließend innerhalb 15 min 10,37 g Vinyltrimethoxysilan zudosiert, die Temperatur erhöht sich bis auf 107°C. Nach 60 min Nachreaktion bei 100°C zeigt die gasvolumetrische Bestimmung der verbleibenden Si-H-Gruppen eine vollständige Umsetzung. In der nachfolgenden Destillation werden in einem Vakuum von etwa 20 mbar bei 130°C in einer Stunde alle flüchtigen Bestandteile abdestilliert. Man erhält ein hellbraunes, klares, viskoses Produkt.

Durchschnittsstruktur: MD^{R'}ₓD^{R"}_{y}D^{R"'}_{z}D₇₆M

| | | |
|---|---|---|
| R' = | 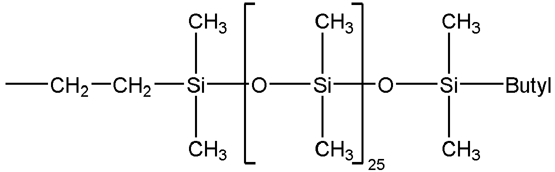 | x= 1,8 |
| R" = | 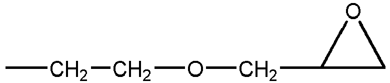 | y = 3,6 |
| R"' = | -CH₂-CH₂-Si(OCH₃)₃ | z = 3,6 |

Es werden folgende GPC-Daten für das Produkt gefunden:
M_{W}: 28041 g/mol, M_{Z}: 67596 g/mol, Mₙ: 3335 g/mol, Polydispersität: 8,40

### Vergleichsbeispiel A

Mono-SiH-funktionelle Polysiloxane werden entsprechend dem beschriebenen Verfahren der Patentschrift DE 102008031901 (Beispiel 1a) hergestellt.

Synthese von monoaminofunktionellen Polysiloxan
In einem mit Rührer, Thermometer, Tropftrichter, Rückflusskühler und Stickstoffeinleitungsrohr versehenen Vierhalskolben werden mono-SiH-funktionelles Polysiloxan (250 g, Mn ≈ 2000 g/mol) und Karstedt Katalysator (4,38 g, 0,2%ige Anlösung in Xylol) vorgelegt, gut durchmischt und auf 100 °C erhitzt. Allylamin (9,29 g) wird während 30 Minuten zugetropft. Die Umsetzung des mono-SiH-funktionellen Polysiloxans wird mittels gasvolumetrischer Bestimmung verfolgt. Nach vollständiger Umsetzung wird das überschüssige Allylamin abdestilliert. Die gemessene Aminzahl des Produktes beträgt 24,1 mg KOH/g.

Synthese eines Polysiloxan-Gruppen enthaltenden Copolymers
In einem mit Rührer, Thermometer, Tropftrichter, Rückflusskühler und Stickstoffeinleitungsrohr versehenen Vierhalskolben werden das monoaminofunktionelle Polysiloxan aus Beispiel 1 (254,7 g) und 1,6-Hexandiglycidylether (169,6 g) vorgelegt und unter Stickstoff auf 140 °C erhitzt. Nach 2 Stunden Reaktionszeit wird langsam unter Rühren Octylamin (75,6 g) zugetropft. Der Epoxidumsatz wird mittels ¹H-NMR verfolgt. Nach quantitativem Umsatz der Epoxidgruppe wird die Reaktion abgebrochen.

Das hier erhaltene Produkt besitzt als Polymerrückgrat eine Epoxy-Amin-Struktur und weist Polysiloxanseitenketten auf, die an das Polymermerrückgrat gebunden sind.

Es werden folgende GPC-Daten für das Produkt gefunden:
M_{W}: 9779 g/mol, Mₙ: 3014 g/mol, Polydispersität: 3,24

### Vergleichsbeispiel B

In einem mit Rührer, Thermometer, Tropftrichter, Rückflusskühler und Stickstoffeinleitungsrohr versehenen Vierhalskolben werden 6,10 g Silaplane FM-0721 (mono-methacrylfunktionelles Polysiloxanmakromer mit einem durchschnittlichen Molekulargewicht von 5,000; Chisso Corporation) und 100 g PMA vorgelegt und gründlich vermischt. Während der gesamten Reaktion wird Stickstoff übergeleitet. Die Temperatur wird auf 135 °C erhöht und es wird innerhalb von 3 Stunden eine Mischung aus 1,21 g MAA, 25,3 g IBMA, 15,4 g HEMA, 17,4 g STY und 0,89 g Trigonox C zudosiert. Nach beendeter Dosierung werden sofort 0,15 g Trigonox C zugegeben. Nach weiteren 30 Minuten und 60 Minuten werden noch mal je 0,15 g Trigonox C zugesetzt. Danach wird der Ansatz noch eine Stunde bei 135 °C gehalten.

Das hier erhaltene Produkt besitzt als Polymerrückgrat ein Poly(meth)acrylatrückgrat und weist entlang des Poly(meth)acrylatrückgrats Hydroxyethylgruppen auf.

Es werden folgende GPC-Daten für das Produkt gefunden:
M_{W}: 14500 g/mol, Mₙ: 3746 g/mol, Polydispersität: 3,87

### Vergleichsbeispiel C

In einem mit Rührer, Thermometer, Tropftrichter, Rückflusskühler und Stickstoffeinleitungsrohr versehenen Vierhalskolben werden 7,21 g Silaplane FM-0721, und 119 g Propylenglykol-mono-methyletheracetat vorgelegt und gründlich vermischt. Während der gesamten Reaktion wird Stickstoff übergeleitet. Die Temperatur wird auf 135 °C erhöht und es wird innerhalb von 3 Stunden eine Mischung aus 32,24 g Isobutylmethacrylat, 18,76 g Glycidylmethacrylat, 21,14 g Styrol und 1,08 g tert-butyl Peroxybenzoat zudosiert. Nach beendeter Dosierung werden sofort 0,18 g von tert-butyl Peroxybenzoat zugegeben. Nach weiteren 30 Minuten und 60 Minuten werden noch mal je 0,18 g Trigonox C zugesetzt. Danach wird der Ansatz noch eine Stunde bei 135 °C gehalten.

Das hier erhaltene Produkt besitzt als Polymerrückgrat ein Poly(meth)acrylatrückgrat und weist entlang des Poly(meth)acrylatrückgrats Glycidylgruppen auf.

Es werden folgende GPC-Daten für das Produkt gefunden:
M_{W}: 16623 g/mol, Mₙ: 5381 g/mol , Polydispersität: 2,63

### Vergleichsbeispiel D

In einem mit Rührer, Thermometer, Tropftrichter, Rückflusskühler und Stickstoffeinleitungsrohr versehenen Vierhalskolben werden 7,21 g Silaplane FM-0721 und 119 g Propylenglykol-mono-methyletheracetat vorgelegt und gründlich vermischt. Während der gesamten Reaktion wird Stickstoff übergeleitet. Die Temperatur wird auf 135 °C erhöht und es wird innerhalb von 3 Stunden eine Mischung aus 41,62 g Isobutylmethacrylat, 9,38 g Glycidylmethacrylat, 21,14 g Styrol und 1,08 g tert-butyl Peroxybenzoat, Akzo Nobel zudosiert. Nach beendeter Dosierung werden sofort 0,18 g tert-butyl Peroxybenzoat zugegeben. Nach weiteren 30 Minuten und 60 Minuten werden noch mal je 0,18 g tert-butyl Peroxybenzoat zugesetzt. Danach wird der Ansatz noch eine Stunde bei 135 °C gehalten.

Das hier erhaltene Produkt besitzt als Polymerrückgrat ein Poly(meth)acrylatrückgrat und weist entlang des Poly(meth)acrylatrückgrats Glycidylgruppen auf, jedoch weniger als in Vergleichsbeispiel C.

Es werden folgende GPC-Daten für das Produkt gefunden:
M_{W}: 12378 g/mol, Mₙ: 4850 g/mol, Polydispersität: 2,55

### ANWENDUNGSBEISPIELE UND TESTVERFAHREN

### 1. Bestimmung der Hydrophobie der Formulierungen durch Messung des Wasser-Kontaktwinkels

Die Beschichtungen wurden drei Tage bei 40 °C gehärtet. Die Kontaktwinkelmessungen gegenüber Wasser wurden, nach dreitägiger Lagerung der Proben bei Raumtemperatur, durchgeführt (Messgerät: Krüss G2, Easy Drop).

### 2. Anschmutzungstests an den Formulierungen

Es wurden der Carbon Black Slurry Test ("CB-Slurry-Test"), der Carbon Black Handcreme Test ("CB-Creme-Test"), der Carbon Black Mineralöl Test ("CB-Öl-Test") sowie der "Marker-Test" durchgeführt.

Der Bewertungsbereich reicht von 1 bis 5, wobei der Wert 1 "keine Rückstände" bedeutet, während der Wert 5 "große Rückstände" bedeutet.

### (a) Carbon Black Slurry Test ("CB-Slurry-Test")

Es wird eine Carbon-Black-Slurry hergestellt, indem 2,0 g Spezial Black 6 (Evonik), 100 g Wasser und 5 Tropfen Flüssigseife (Pril®) vermischt werden. Die Carbon-Black-Slurry wird mit einem kleinen Pinsel auf das beschichtete Blech aufgebracht. Anschließend wird 1 Stunde bei 50 °C getrocknet. Dann werden die Bleche unter fließendem Wasser und unter Verwendung eines weichen Pinsels gewaschen. Es wird solange ohne Verwendung von Seife oder härterem Schrubben gewaschen, bis die Beschichtung so gut wie möglich gereinigt ist.

### (b) Carbon Black Handcreme Test ("CB-Creme-Test"):

Es wird eine 1 gewichtsprozentige Präparation von Carbon Black Pulver (Typ FW 200 von der Firma Evonik Degussa) in einer Handcreme (Wuta Kamille Handcreme der Firma Herbacin Cosmetic GmbH) hergestellt. Diese wird mit dem Finger auf den beschichteten Blechen verrieben. Die angeschmutzten Bleche werden über Nacht bei Raumtemperatur gelagert und anschließend mit trockenem Papier (Tork Papierhandtücher der Firma Svenska Cellulosa AB) oder nassem Papier (Seife), welches mit einer 5 %-igen Pril®-Lösung getränkt wurde, gereinigt, um die Reinigungsfähigkeit zu überprüfen.

### (c) Carbon Black Mineralöl Test ("CB-Öl-Test"):

Es wird eine 1 gewichtsprozentige Aufschlämmung von Carbon Black Pulver (Typ FW 200 von der Firma Evonik Degussa) in Mineralöl (Q8 Puccini 32P der Firma Kuwait Petroleum International Lubricants) hergestellt. Diese wird mit dem Finger auf den beschichteten Blechen verrieben. Die angeschmutzten Bleche werden über Nacht bei Raumtemperatur gelagert und anschließend mit trockenem Papier (Tork Papierhandtücher der Firma Svenska Cellulosa AB)oder nassem Papier, welches mit einer 5 %-igen Pril®-Lösung getränkt wurde gereinigt, um die Reinigungsfähigkeit zu überprüfen.

### 3. Marker-Test

Es wird mit einem Permanent-Marker des Typs "Magic Ink Red" (erhältlich von der Firma Magic Ink Company, Japan), die Lackoberfläche beschriftet nach dem Trocknen (1 Minute) der Tinte wird versucht diese mit einem trockenen Tuch abzuwischen oder mit Isopropanol getränktem Papier. Der Bewertungsbereich reicht von 1 bis 5, wobei der Wert 1 bedeutet "die Tinte lässt sich restlos mit einem Papiertuch entfernen" und der Wert 5 bedeutet lässt sich praktisch nicht entfernen".

### 4. Messung des Verlaufs der Formulierungen

Der Verlauf wurde mit dem Wave-Scan-Dual-Gerät der Firma BYK-Gardner auf den beschichteten Blechen gemessen. Es wurde die lange Welle (LW = "long wave") und die kurze Welle (SW = "short wave") bestimmt.

### 5. Bestimmung des Gleitwiderstandes

Die Bestimmung des Gleitwiderstandes (slip) beziehungsweise der Reduzierung des Gleitwiderstands erfolgte mit dem Slip-Messgerät Altek Modell 9505 AE nach der anwendungstechnischen Prüfmethode APM-001 der BYK-Chemie GmbH. Hierzu wird der zu prüfende Beschichtungsstoff auf 10x40 cm große Glasplatten, die zuvor in der Spülmaschine gereinigt wurden, appliziert. Die Platte wir auf eine Aufziehbank geklemmt und so positioniert, dass ein 500g-Gewicht mittig auf die Beschichtung gestellt werden kann. Das Gewicht wird mit einer Geschwindigkeit von 5 Zoll/min über die Probe geschoben. Die Messungen werden gegen eine Standard-Probe (Null-Probe) durchgeführt, auf die bei der Auswertung als Bezug genommen wird. Bei der Auswertung wird ein Absolutwert (COF = coefficient of friction) angegeben

### Beschichtungsmittel-Systeme

Die anwendungstechnische Prüfung der erfindungsgemäßen Polysiloxane erfolgte in fünf verschiedenen Beschichtungsmitteln.

### Beschichtungsmittel 1

### Beschichtungsmittel auf der Basis eines lösemittelbasierten pigmentierten Epoxyharz/ Polyamid-Härter-Systems (konventionelles Epoxy-System)

Zur Herstellung des Beschichtungsmittels wird wie folgt vorgegangen. Zunächst wird eine Komponente A hergestellt, indem die an Positionen 1 bis 3 der Tabelle 1 aufgeführten Materialien mittels eines Dissolvers mit einer Zahnradscheibe bei 2000 Umdrehungen pro Minute bis zur Homogenität vermischt werden. Die entsprechenden Mengen sind in Tabelle 1 in Gewichtsteilen angegeben. Anschließend wird das Material der Position 4 der Tabelle 1 zugegeben und bei 3000 Umdrehungen pro Minute gemischt bis sich ein einwandfreies Gel bildet. Danach werden die Materialien der Positionen 5 bis 7 der Tabelle 1 bei 3000 Umdrehungen pro Minute zugegeben und es wird weitere 15 Minuten gerührt. Danach werden die Materialien der Positionen 8 bis 11 der Tabelle 1 bei 2000 Umdrehungen pro Minute zugegeben und es wird weitere 5 Minuten gerührt.

Komponente B wird hergestellt indem die Materialien der Positionen 12 bis 14 der Tabelle 1 für 15 Minuten bei 2000 Umdrehungen pro Minute verrührt werden.

Im nächsten Schritt werden 2 Gew.-% Additiv (erfindungsgemäßes Polysiloxan oder nicht-erfindungsgemäßes Additiv) bezogen auf die Summe der Komponenten A und B zu der Mischungen der Komponenten A und B gegeben und es wird für 5 Minuten bei 2000 Umdrehungen pro Minute gerührt.

Die Beschichtungsmittelzusammensetzung wird in einer Nassfilmschichtdicke von 150 µm auf eine Glasplatte appliziert. Die Glasplatte wird über Nacht bei Raumtemperatur (23 °C) aufbewahrt und anschließend für 3 Tage in einem Ofen bei 40 °C getrocknet.

Nach dem Abkühlen wird der Beschichtungsfilm den oben aufgeführten Testverfahren unterzogen.

**Tabelle 1**

| Position | Komponente A | |
|---|---|---|
| 1 | Dowanol PM¹ | 3,9 |
| 2 | Xylol | 4,7 |
| 3 | Epikote 1001X75² | 15,6 |
| 4 | Bentone SD-2³ | 1,2 |
| 5 | Disperbyk-142⁴ | 0,6 |
| 6 | Ti-Pure R902⁵ | 25,0 |
| 7 | Blanc Fixe N⁶ | 14,6 |
| 8 | Epikote 1001X75² | 23,4 |
| 9 | Solvesso 100⁷ | 5,9 |
| 10 | Dowanol PM¹ | 2,4 |
| 11 | Xylol | 2,7 |
| | Gesamt | 100,0 |
| | | |

| Position | Komponente B | |
|---|---|---|
| 12 | Ancamide 220-X-70⁸ | 10,0 (95,5 %-ig Vernetzer) |
| 13 | Ancamine K-54⁹ | 0,4 |
| 14 | Xylol | 2,0 |
| | Gesamt | 12,4 |

| | | |
|---|---|---|
| ¹Dowanol PM ist ein Propylenglykolmethylether der Firma Dow Chemical Company ²Epikote 1001X75 ist eine 75 gew.-%ige Lösung eines Epoxaharzes in Xylol der Firma Momentive ³Bentone SD-2 ist ein Rheologieadditiv auf Basis eines organisch modifizierten Bentonittons der Firma Elementis Specialties ⁴Disperbyk-142 ist ein Netz- und Dispergiermittel der Firma Byk Chemie GmbH ⁵Ti-Pure R902 ist ein Titandioxid-Pigment der Firma DuPont Titanium Technologies ⁶Blanc Fixe N is ein synthetisches Bariumsulfat der Firma Solvay Chemicals ⁷Solvesso 100 ist ein aromatisches Lösemittel der Firma ExxonMobil ⁸Ancamide 220-X-70 ist ein Härter der Firma Air Products ⁹Ancamine K-54 ist ein Epoxy-Beschleuniger der Firma Air Products | | |

### Beschichtungsmittel 2

### Beschichtungsmittel auf der Basis eines lösemittelfreien pigmentierten Epoxyharz/Polyamid-Epoxy-Härter-Systems (Lösemittelfreies Epoxysystem mit hoher Viskosität)

Zur Herstellung des Beschichtungsmittels wird wie folgt vorgegangen. Zunächst wird eine Komponente A hergestellt, indem die an Positionen 1 bis 5 der Tabelle 2 aufgeführten Materialien mittels eines Dissolvers mit einer Zahnradscheibe bei 2000 Umdrehungen pro Minute bis zur Homogenität vermischt werden. Die entsprechenden Mengen sind in Tabelle 2 in Gewichtsteilen angegeben. Anschließend wird das Material der Positionen 6 bis 7 der Tabelle 2 zugegeben und bei 3000 Umdrehungen pro Minute gemischt. Danach werden die Materialien der Position 8 der Tabelle 2 bei 3000 Umdrehungen pro Minute zugegeben und es wird weitere 10 Minuten gerührt.

Im nächsten Schritt werden 2 Gew.-% Additiv (erfindungsgemäßes Polysiloxan oder nicht-erfindungsgemäßes Additiv) bezogen auf die Summe der Komponenten A und B zu der Mischungen der Komponenten A und B gegeben und es wird für 5 Minuten bei 2000 Umdrehungen pro Minute gerührt.

Die Beschichtungsmittelzusammensetzung wird in einer Nassfilmschichtdicke von 150 µm auf eine Glasplatte appliziert. Die Glasplatte über Nacht bei Raumtemperatur (23 °C) aufbewahrt und anschließend für 3 Tage in einem Ofen bei 40 °C getrocknet.

Nach dem Abkühlen wird der Beschichtungsfilm den oben aufgeführten Testverfahren unterzogen.

**Tabelle 2**

| Position | Komponente A | |
|---|---|---|
| 1 | Epikote 828¹ | 41,00 |
| 2 | Ruetasolv DI² | 5,00 |
| 3 | Disperbyk 2152³ | 0,80 |
| 4 | BYK A 530⁴ | 0,80 |
| 5 | BYK-310⁵ | 0,10 |
| 6 | Blanc Fixe micro⁶ | 25,00 |
| 7 | Ti-Pure R960⁷ | 23,00 |
| 8 | Ruetasolv DI | 4,30 |
| | Gesamt | 100,0 |
| | | |

| Position | Komponente B | |
|---|---|---|
| 9 | Epikure 3155⁸ | 28,70 |
| | Gesamt | 28,70 |

| | | |
|---|---|---|
| ¹Epikote 828 ist ein Epoxyharz von Shell International Chemical Corporation ²Ruetasolv DI "Ruetasolv DI" ist Di-isopropyl Naphthalene von Rutgers Kureha ³Disperbyk 2152 ist ein Netz- und Dispergiermittel der Firma Byk Chemie GmbH ⁴BYK A 530 ist ein Entschäumer der Firma Byk Chemie GmbH ⁵BYK-310 ist ein Oberflächenadditiv der Firma Byk Chemie GmbH ⁶ Blanc Fixe micro ist ein synthetisches Bariumsulfat der Firma Sachtleben Chemie ⁷Ti-Pure R902 ist ein Titandioxid-Pigment der Firma DuPont Titanium Technologies ⁸Epikure 3155 ist ein Härter der Momentive | | |

### Beschichtungsmittel 3

### Beschichtungsmittel auf der Basis eines lösemittelfreien pigmentierten Epoxyharz/Polyaminoamidhärter-Systems (lösemittelfreies Epoxysystem mit niedriger Viskosität)

Zur Herstellung des Beschichtungsmittels wird wie folgt vorgegangen. Zunächst wird eine Komponente A hergestellt, indem die an Positionen 1 bis 4 der Tabelle 3 aufgeführten Materialien mittels eines Dissolvers mit einer Zahnradscheibe bei 2000 Umdrehungen pro Minute bis zur Homogenität vermischt werden. Die entsprechenden Mengen sind in Tabelle 3 in Gewichtsteilen angegeben. Danach werden die Materialien der Positionen 5 bis 6 der Tabelle 3 bei 3000 Umdrehungen pro Minute zugegeben und es wird weitere 15 Minuten gerührt. Danach werden die Materialien der Position 7 der Tabelle 3 bei 2000 Umdrehungen pro Minute zugegeben und es wird weitere 5 Minuten gerührt.

Im nächsten Schritt werden 2 Gew.-% Additiv (erfindungsgemäßes Polysiloxan oder nicht-erfindungsgemäßes Additiv) bezogen auf die Summe der Komponenten A und B zu der Mischungen der Komponenten A und B gegeben und es wird für 5 Minuten bei 2000 Umdrehungen pro Minute gerührt.

Die Beschichtungsmittelzusammensetzung wird in einer Nassfilmschichtdicke von 150 µm auf eine Glasplatte appliziert. Die Glasplatte über Nacht bei Raumtemperatur (23 °C) aufbewahrt und anschließend für 3 Tage in einem Ofen bei 40 °C getrocknet.

Nach dem Abkühlen wird der Beschichtungsfilm den unten aufgeführten Testverfahren unterzogen.

**Tabelle 3**

| Position | Komponente A | |
|---|---|---|
| 1 | Araldite GY793 BD¹ | 41.00 |
| 2 | Disperbyk 142² | 1.00 |
| 3 | BYK A 530³ | 0.80 |
| 4 | BYK 310⁴ | 0.20 |
| 5 | Blancfixe micro⁵ | 30,00 |
| 6 | Ti-Pure R960⁶ | 22.00 |
| 7 | Benzylalkohol⁷ | 5.00 |
| | Gesamt | 100,0 |
| | | |

| Position | Komponente B | |
|---|---|---|
| 8 | Aradur 44 BD⁸ | 17,00 |
| | Gesamt | 17,00 |

| | | |
|---|---|---|
| ¹Araldite GY793 BD ist ein Epoxyharz von Hunstman ²Disperbyk 142 ist ein Netz- und Dispergiermittel der Firma Byk Chemie GmbH ³BYK A 530 ist ein Entschäumer der Firma Byk Chemie GmbH ⁵ BYK-310 ist ein Oberflächenadditiv der Firma Byk Chemie GmbH ⁶ Blanc Fixe micro ist ein synthetisches Bariumsulfat der Firma Sachtleben Chemie ⁷Ti-Pure R902 ist ein Titandioxid-Pigment der Firma DuPont Titanium Technologies ⁸Aradur 44 BD ist ein Härter der Firma Hunstman | | |

### Beschichtungsmittel 4

### Beschichtungsmittel auf der Basis eines "High-Solids" pigmentierten Epoxyharz/Polyamidhärter-Systems (Epoxysystem mit hohem Festkörperanteil und hoher Viskosität)

Zur Herstellung des Beschichtungsmittels wird wie folgt vorgegangen. Zunächst wird eine Komponente A hergestellt, indem die an Positionen 1 bis 4 der in Tabelle 4 aufgeführten Materialien mittels eines Dissolvers mit einer Zahnradscheibe bei 2000 Umdrehungen pro Minute bis zur Homogenität vermischt werden. Die entsprechenden Mengen sind in Tabelle 4 in Gewichtsteilen angegeben. Danach werden die Materialien der Positionen 5 bis 6 der Tabelle 4 bei 3000 Umdrehungen pro Minute zugegeben und es wird weitere 15 Minuten gerührt. Danach werden die Materialien der Positionen 7 bis 9 der Tabelle 4 bei 2000 Umdrehungen pro Minute zugegeben und es wird weitere 5 Minuten gerührt.

Im nächsten Schritt werden 2 Gew.-% Additiv (erfindungsgemäßes Polysiloxan oder nicht-erfindungsgemäßes Additiv) bezogen auf die Summe der Komponenten A und B zu der Mischungen der Komponenten A und B gegeben und es wird für 5 Minuten bei 2000 Umdrehungen pro Minute gerührt.

Die Beschichtungsmittelzusammensetzung wird in einer Nassfilmschichtdicke von 150 µm auf eine Glasplatte appliziert. Die Glasplatte über Nacht bei Raumtemperatur (23 °C) aufbewahrt und anschließend für 3 Tage in einem Ofen bei 40 °C getrocknet.

Nach dem Abkühlen wird der Beschichtungsfilm den oben aufgeführten Testverfahren unterzogen.

**Tabelle 4**

| Position | Komponente A | |
|---|---|---|
| 1 | Epikote 874X90¹ | 38,20 |
| 2 | BYK-A530² | 0,80 |
| 3 | BYK-310³ | 0,10 |
| 4 | Disperbyk-2152⁴ | 0,80 |
| 5 | Ti-Pure R960⁵ | 25,40 |
| 6 | Blanc Fixe micro⁶ | 25,70 |
| 7 | Epikote 834X80⁷ | 4,60 |
| 8 | MEK⁸ | 2,00 |
| 9 | Dowanol PM⁹ | 1,40 |
| | Gesamt | 100,0 |
| | | |

| Position | Komponente B | |
|---|---|---|
| 8 | Epikure 3155¹⁰ | 19,74 |
| | Gesamt | 19,74 |

| | | |
|---|---|---|
| ¹Epikote 874X90 ist ein Epoxyharz von Momentive ²BYK A 530 ist ein Entschäumer der Firma Byk Chemie GmbH ³BYK 310 ist ein Oberflächenadditiv der Firma Byk Chemie GmbH ⁴Disperbyk 2152 ist ein Netz- und Dispergiermittel der Firma Byk Chemie GmbH ⁵ Blanc Fixe micro ist ein synthetisches Bariumsulfat der Firma Sachtleben Chemie ⁶Ti-Pure R902 ist ein Titandioxid-Pigment der Firma DuPont Titanium Technologies ⁷Epikote 834X80 ist ein Epoxyharz von Momentive ⁸MEK ist Methylethylketone ⁹Dowanol PM ist Propyleneglykol mono-Methylether der Firma Dow ¹⁰Epikure 3155 ist ein Härter der Firma Momentive | | |

### Beschichtungsmittel 5

### Beschichtungsmittel auf der Basis eines "High-Solids" pigmentierten Epoxyharz/Polyamidhärter-Systems (Epoxysystem mit hohem Festkörperanteil und niedriger Viskosität)

Zur Herstellung des Beschichtungsmittels wird wie folgt vorgegangen. Zunächst wird eine Komponente A hergestellt, indem die an Positionen 1 bis 4 der in Tabelle 5 aufgeführten Materialien mittels eines Dissolvers mit einer Zahnradscheibe bei 2000 Umdrehungen pro Minute bis zur Homogenität vermischt werden. Die entsprechenden Mengen sind in Tabelle 5 in Gewichtsteilen angegeben. Danach werden die Materialien der Positionen 5 bis 6 der Tabelle 5 bei 3000 Umdrehungen pro Minute zugegeben und es wird weitere 15 Minuten gerührt. Danach werden die Materialien der Positionen 7 bis 9 der Tabelle 5 bei 2000 Umdrehungen pro Minute zugegeben und es wird weitere 5 Minuten gerührt. Anschluss wird mit der Position 11 bei 2000 Umdrehungen pro Minute verdünnt und es wird weitere 5 Minuten gerührt.

Im nächsten Schritt werden 2 Gew.-% Additiv (erfindungsgemäßes Polysiloxan oder nicht-erfindungsgemäßes Additiv) bezogen auf die Summe der Komponenten A und B zu der Mischungen der Komponenten A und B gegeben und es wird für 5 Minuten bei 2000 Umdrehungen pro Minute gerührt.

Die Beschichtungsmittelzusammensetzung wird in einer Nassfilmschichtdicke von 150 µm auf eine Glasplatte appliziert. Die Glasplatte über Nacht bei Raumtemperatur (23 °C) aufbewahrt und anschließend für 3 Tage in einem Ofen bei 40 °C getrocknet.

Nach dem Abkühlen wird der Beschichtungsfilm den oben aufgeführten Testverfahren unterzogen.

**Tabelle 5**

| Position | Komponente A | |
|---|---|---|
| 1 | Epikote 874X90¹ | 38,20 |
| 2 | BYK-A530² | 0,80 |
| 3 | BYK-310³ | 0,10 |
| 4 | Disperbyk-2152⁴ | 0,80 |
| 5 | Ti-Pure R960⁵ | 25,40 |
| 6 | Blanc Fixe micro⁶ | 25,70 |
| 7 | Epikote 834X80⁷ | 4,60 |
| 8 | MEK⁸ | 2,00 |
| 9 | Dowanol PM⁹ | 1,40 |
| | Gesamt | 100,0 |
| | | |

| Position | Komponente B | |
|---|---|---|
| 10 | Epikure 3155¹⁰ | 19,74 |
| | Gesamt | 19,74 |

| Position | Komponente C | |
|---|---|---|
| 11 | Dowanol PM⁹ | 8,00 |
| | Gesamt | 8,00 |

### TESTERGEBNISSE

### Beschichtungsmittel 1

**Tabelle 6a**

| Additiv | CB-Slurry-Test | CB-Creme-Test | | Marker-Test |
|---|---|---|---|---|
| | | Seife | Tuch | Tuch |
| ohne Additiv | 3 | 5 | 5 | 5 |
| Vergleichsbeispiel A | 1 | 1 | 2 | 1 |
| Vergleichsbeispiel B | 5 | 3 | 4 | 5 |
| Vergleichsbeispiel C | 5 | 1 | 4 | 5 |
| Vergleichsbeispiel D | 5 | 5 | 5 | 5 |
| BYK 307* (Vergleich) | 1 | 5 | 5 | 4 |
| Beispiel 3 (Vergleich) | 1 | 1 | 2 | 1 |
| Beispiel 4 (Vergleich) | 1 | 1 | 2 | 1 |
| Beispiel 1 | 1 | 1 | 1 | 1 |
| Beispiel 2 | 1 | 1 | 1 | 1 |
| Beispiel 5 | 1 | 1 | 1 | 1 |
| Beispiel 6 | 1 | 1 | 1 | 1 |
| Beispiel 7 | 1 | 1 | 1 | 1 |

| | | | | |
|---|---|---|---|---|
| *polyethermodifiziertes Polysiloxan der Firma Byk-Chemie GmbH | | | | |

Die Ergebnisse der Tabelle 6a zeigen, dass durch die Verwendung der erfindungsgemäßen Polysiloxane als Additiv mindestens vergleichbar gute bei einigen Tests sogar bessere schmutz- und ölabweisende Oberflächen erzielt werden, als mit den Vergleichsprodukten. Überraschend war insbesondere, dass die erfindungsgemäßen Polysiloxane sogar bessere Eigenschaften aufweisen, als das Additiv des Vergleichsbeispiels A, obgleich dieses aufgrund seines Epoxy-Amin-Rückgrats chemisch der epoxyharzbasierten Beschichtungsmittelzusammensetzung des Beschichtungsmittel 1 noch näher kommt.

**Tabelle 6b**

| | Verlauf (Lw / Sw) | COF | Marker-Test | Wasserkontaktwinkel (°) |
|---|---|---|---|---|
| ohne Additiv | 24.5 / 25.4 | 0.55 | 5 | 79 |
| Beispiel 3 (Vergleich) | 3.9 / 18.0 | 0.05 | 1 | 99 |
| Beispiel 4 (Vergleich) | 3.9 / 17.4 | 0.06 | 1 | 96 |
| Beispiel 1 | 3.6 / 17.1 | 0.05 | 1 | 101 |
| Beispiel 5 | 3.4 / 17.2 | 0.05 | 1 | 102 |
| Beispiel 6 | 3.4 / 17.2 | 0.05 | 1 | 100 |

Den Ergebnissen der Tabelle 6b ist entnehmbar, dass die erfindungsgemäßen Polysiloxane sowohl einen besseren Verlauf, als auch einen höheren Wasserkontaktwinkel aufweisen als die Additive der nicht erfindungsgemäßen Vergleichsbeispiele 3 und 4.

### Beschichtungsmittel 2

**Tabelle 7**

| | CB-Slurry-Test | CB-Creme-Test | | Verlauf (Lw/Sw) | COF | Marker-Test | Wasser Kontaktwinkel (°) |
|---|---|---|---|---|---|---|---|
| | | Tuch | Seife | | | | |
| ohne Additiv | 3 | 5 | 5 | 27.9 / 28.4 | 0.17 | 5 | 86 |
| Beispiel 3 (Vergleich) | 1 | 1 | 1 | 32.7 / 27.9 | 0.06 | 1 | 99 |
| Beispiel 4 (Vergleich) | 1 | 1 | 1 | 25.3 / 28.4 | 0.07 | 2 | 98 |
| Beispiel 1 | 1 | 1 | 1 | 27.3 / 28.1 | 0.04 | 1 | 103 |
| Beispiel 5 | 1 | 1 | 1 | 17.6 / 28.4 | 0.04 | 1 | 99 |
| Beispiel 6 | 1 | 1 | 1 | 17.6 / 27.3 | 0.05 | 1 | 98 |

Auch im Beschichtungsmittel 2 besitzen die erfindungsgemäßen Polysiloxane eine deutlich höhere verlauffördernde Wirkung im Longwave-Bereich etwa gleichem Wasserkontaktwinkel oder sie besitzen bei ähnlichem Verlauf einen höheren Wasserkontaktwinkel.

### Beschichtungsmittel 3

**Tabelle 8**

| | CB-Slurry-Test | CB-Creme-Test | | Verlauf (Lw/Sw) | COF | Marker-Test | Wasser Kontaktwinkel (°) |
|---|---|---|---|---|---|---|---|
| | | Tuch | Seife | | | | |
| ohne Additiv | 1 | 3 | 5 | 15.1 / 30.7 | 0.19 | 5 | **95** |
| Beispiel 3 (Vergleich) | 4 | 1 | 1 | 8.5 / 23.0 | 0.04 | 1 | **99** |
| Beispiel 4 (Vergleich) | 1 | 1 | 1 | 7.3 / 23.5 | 0.04 | 1 | **93** |
| Beispiel 1 | 1 | 1 | 1 | 8.0 / 23.1 | 0.04 | 1 | **97** |
| Beispiel 5 | 1 | 1 | 1 | 9.5 / 25.7 | 0.04 | 1 | **97** |
| Beispiel 6 | 2 | 1 | 1 | 9.4 / 25.5 | 0.05 | 1 | **100** |

### Beschichtungsmittel 4

**Tabelle 9**

| | CB-Slurry-Test | CB-Creme-Test | | Verlauf (Lw/Sw) | COF | Marker-Test | Wasser Kontaktwinkel (°) |
|---|---|---|---|---|---|---|---|
| | | Tuch | Seife | | | | |
| ohne Additiv | 1 | 5 | 5 | 6.4 / 12.7 | 0.14 | 5 | 82 |
| Beispiel 3 (Vergleich) | 1 | 5 | 5 | 6.9 / 8.9 | 0.08 | 2 | 89 |
| Beispiel 4 (Vergleich) | 1 | 5 | 5 | 8.6 / 9.8 | 0.08 | 3 | 88 |
| Beispiel 1 | 1 | 5 | 3 | 7.7 / 9.1 | 0.08 | 2 | 90 |
| Beispiel 5 | 1 | 4 | 3 | 7.5 / 10.0 | 0.09 | 1 | 99 |
| Beispiel 6 | 1 | 4 | 3 | 7.8 / 9.9 | 0.10 | 2 | 93 |

### Beschichtungsmittel 5

**Tabelle 10**

| | CB-Slurry-Test | CB-Creme-Test | | Verlauf (Lw/Sw) | COF | Marker-Test | Wasser Kontaktwinkel (°) |
|---|---|---|---|---|---|---|---|
| | | Tuch | Seife | | | | |
| ohne Additiv | 4 | 5 | 5 | 7.1 / 7.6 | 0.15 | 5 | 78 |
| Beispiel 3 (Vergleich) | 1 | 3 | 2 | 6.7 / 7.9 | 0.06 | 2 | 92 |
| Beispiel 4 (Vergleich) | 1 | 5 | 3 | 5.7 / 7.6 | 0.07 | 1 | 88 |
| Beispiel 1 | 1 | 3 | 1 | 5.4 / 7.3 | 0.07 | 1 | 93 |
| Beispiel 5 | 1 | 2 | 1 | 6.2 / 8.3 | 0.09 | 1 | 93 |
| Beispiel 6 | 1 | 2 | 1 | 6.5 / 9.0 | 0.08 | 1 | 98 |

Die Ergebnisse der Tabellen zeigen, dass die erfindungsgemäßen Polysiloxane die Lackoberfläche hydrophobieren und mit "Easy-to-Clean"-Eigenschaften (Leichtreinigungs-Eigenschaften) ausrüsten.

## Patentansprüche

1. Polysiloxan, erhältlich durch die Addition mindestens eines monovinylfunktionellen Polysiloxans und mindestens einer epoxyfunktionellen, monovinylfunktionellen Komponente an ein Si-H-funktionelles Polysiloxan, **dadurch gekennzeichnet, dass** das mindestens eine monovinylfunktionelle Polysiloxane die Formel (I) besitzt: 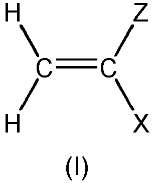 worin
Z für Wasserstoff oder eine Alkylgruppe mit 1 bis 4 Kohlenstoffatomen und
X für einen einbindigen Rest der der folgenden Formel steht: 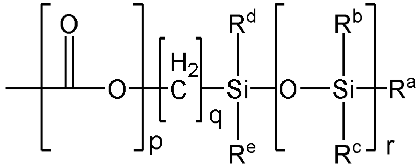
worin p = 0 oder 1, q = 0 bis 30 und r = 1 bis 400 ist und sofern p = 1 ist q ≥ 2 ist,
R^{a} für einen linearen halogenierten oder nicht halogenierten Alkylrest mit 1 bis 30 Kohlenstoffatomen, einen verzweigten oder zyklischen, halogenierten oder nicht halogenierten Alkylrest mit 3 bis 30 Kohlenstoffatomen oder einen Arylrest mit 6 bis 30 Kohlenstoffatomen oder einen Alkylarylrest oder einen Arylalkylrest mit 7 bis 30 Kohlenstoffatomen oder einen Alkoxyalkylenoxidalkylrest oder Alkoxypolyalkylenoxidalkylrest steht,
alle R^{b}, R^{c}, R^{d} und R^{e} unabhängig voneinander für einen linearen halogenierten oder nicht halogenierten Alkylrest mit 1 bis 30 Kohlenstoffatomen, einen verzweigten oder zyklischen, halogenierten oder nicht halogenierten Alkylrest mit 3 bis 30 Kohlenstoffatomen oder einen Arylrest mit 6 bis 30 Kohlenstoffatomen oder einen Alkylarylrest oder einen Arylalkylrest mit 7 bis 30 Kohlenstoffatome stehen,
R^{d} und R^{e} zusätzlich unabhängig voneinander für R^{a}[SiR^{b}R^{c}O]ᵣ stehen können, worin
R^{a}, R^{b}, R^{c} und r wie oben definiert sind und unabhängig davon ausgewählt sind.

2. Polysiloxan gemäß Anspruch 1, **dadurch gekennzeichnet, dass** das Si-H-funktionelle Polysiloxan kettenförmig ist.

3. Polysiloxan gemäß einem der Ansprüche 1 oder 2, **dadurch gekennzeichnet, dass** die mindestens eine epoxyfunktionelle, monovinylfunktionelle Komponente die Formel (II) besitzt: 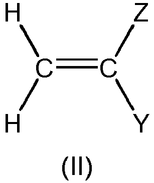 worin
Z für Wasserstoff oder eine Alkylgruppe mit 1 bis 4 Kohlenstoffatomen und
Y für einen einbindigen Rest der folgenden Formel steht:
-L-Epoxy
worin L für eine Verbindungsgruppe und Epoxy für einen Oxiranring stehen und wobei der Oxiranring mit einem oder beiden Kohlenstoffatomen an die Verbindungsgruppe L gebunden ist.

4. Polysiloxan gemäß einem oder mehreren der Ansprüche 1 bis 3, **dadurch gekennzeichnet, dass** mindestens eine vom monovinylfunktionellen Polysiloxan und von der epoxyfunktionellen, monovinylfunktionellen Komponente verschiedene monovinylfunktionelle Komponente mit dem Si-H-funktionellen Polysiloxan zur Reaktion gebracht wird und diese Komponente die Formel (III) besitzt: 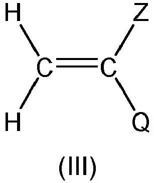 worin
Z für Wasserstoff oder eine Alkylgruppe mit 1 bis 4 Kohlenstoffatomen steht und
Q für einen einbindigen Rest der folgenden Formel steht:
-(L')ᵥ-R
worin v = 0 oder 1 ist,
L' für eine Verbindungsgruppe steht und
R für einen Rest -SiR^{x}ₙR^{y}₃₋ₙ steht, worin
n = 1 bis 3 ist,
R^{x} unabhängig voneinander für Halogen, OAlkyl, oder für O-CO-Alkyl steht, und
R^{y} für Alkyl steht oder für Aryl mit 6 bis 10 Kohlenstoffatomen; oder
R für einen polymeren Rest mit Ether-, Ester- und/oder Urethangruppen steht.

5. Polysiloxan gemäß einem oder mehreren der Ansprüche 1 bis 4, **dadurch gekennzeichnet, dass** mindestens eine monohydroxyfunktionelle polymere Komponente, die Ether, Ester und/oder Urethangruppen aufweist durch Kondensationsreaktion mit dem Si-H-funktionellen Polysiloxan umgesetzt wird bevor Additionsreaktionen monovinylfunktioneller Komponenten an das Si-H-funktionelle Polysiloxan durchgeführt werden.

6. Polysiloxan gemäß einem oder mehreren der Ansprüche 1 bis 5, **dadurch gekennzeichnet, dass** dieses allgemeine Formel (IV) besitzt: 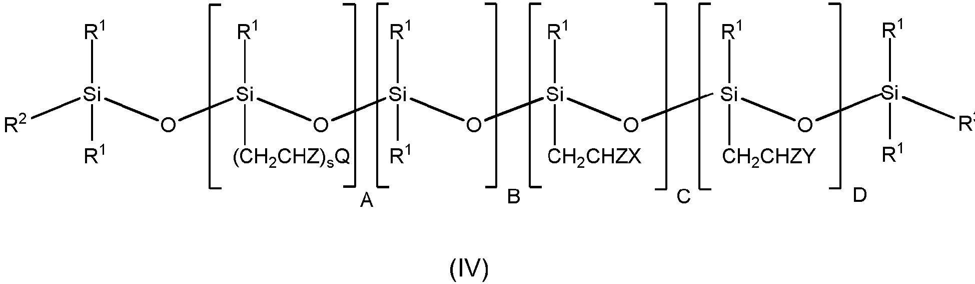 wobei
X, Y, Z und Q wie in Ansprüchen 1 bis 6 definiert sind,
s = 0 oder 1 ist;
R¹ unabhängig voneinander für C₁-C₁₄-Alkyl, C₆-C₁₀-Aryl oder C₇-C₁₂-Aralkyl stehen;
R² und R³ unabhängig voneinander für CH₂CHZX, CH₂CHZY oder (CH₂CHZ)ₛQ, oder für -(R⁴)ᵢ-C₁-C₁₄-Alkyl,
-(R⁴)ᵢ-C₆-C₁₄-Aryl oder -(R⁴)ᵢ-C₇-C₁₄-Aralkyl stehen, worin i = 0 oder 1 ist und R⁴ für O, O-CO, O-CO-O oder -OSO₂- steht;
A = 0 bis 20, B = 2 bis 300, C = 0 bis 20 und D = 0 bis 20 ist;
wobei für C = 0 gilt, dass R² = X und/oder R³ = X ist, und
wobei für D = 0 gilt, dass R² = Y und/oder R³ = Y ist.

7. Verfahren zur Herstellung eines oder mehrerer Polysiloxane wie sie in den Ansprüchen 1 bis 6 definiert sind, **dadurch gekennzeichnet, dass** das Si-H-funktionelle Polysiloxan in einer fakultativen ersten Stufe teilweise mit einer monohydroxyfunktionellen, polymeren Komponente durch Kondensationsreaktion umgesetzt wird und in einer weiteren Stufe durch Hydrosilylierungsreaktionen mit den monovinylfunktionellen Komponenten umgesetzt wird.

8. Zusammensetzung umfassend eines oder mehrere der Polysiloxane wie sie in den Ansprüche 1 bis 6 definiert sind.

9. Zusammensetzung gemäß Anspruch 8, **dadurch gekennzeichnet, dass** es sich um ein Beschichtungsmittel, eine polymere Formmasse oder einen Thermoplasten handelt.

10. Zusammensetzungen gemäß einem der Ansprüche 8 oder 9, **dadurch gekennzeichnet, dass** die Zusammensetzung Epoxidharze enthält.

11. Zusammensetzung gemäß einem der Ansprüche 8 bis 10, **dadurch gekennzeichnet, dass** das oder die Polysiloxane wie sie in den Ansprüchen 1 bis 6 definiert sind in einer Gesamtmenge von 0,1 bis 10 Gew.-% bezogen auf das Gesamtgewicht der Zusammensetzung enthalten sind.

12. Verfahren zur Beschichtung eines Substrats gewählt aus den Materialien Metall, Glas, Keramik und Kunststoff, wobei eine erfindungsgemäße Zusammensetzung wie sie in den Ansprüchen 8 bis 11 definiert ist auf das Substrat aufgebracht wird, die Beschichtung physikalisch getrocknet wird und/oder durch reaktive Selbstvernetzung gehärtet wird und/oder durch reaktive Fremdvernetzung gehärtet wird.

13. Beschichtetes Substrat erhältlich nach dem Verfahren gemäß Anspruch 12.

14. Verwendung der Polysiloxane wie sie in den Ansprüchen 1 bis 6 definiert sind als Additive für Zusammensetzungen gewählt aus der Gruppe der Beschichtungsmittel, polymeren Formmassen und Thermoplasten zur Ausrüstung der Oberflächen der gehärteten Zusammensetzungen mit antiadhäsiven und/oder schmutzabweisenden Eigenschaften.

## Claims

1. Polysiloxane, obtainable by means of the addition of at least one mono-vinyl functional polysiloxane and at least one epoxy-functional, mono-vinyl functional component to an Si-H functional polysiloxane, **characterised in that** the at least one mono-vinyl functional polysiloxane has the formula (I): 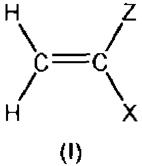 wherein
Z stands for hydrogen or an alkyl group with 1 to 4 carbon atoms and
X stands for a monovalent radical of the following formula: 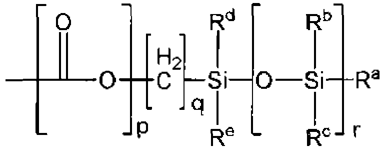
wherein p = 0 or 1, q = 0 to 30 and r = 1 to 400 and if p = 1 then q ≥ 2,
R^{a} denotes a linear halogenated or non-halogenated alkyl radical having 1 to 30 carbon atoms, a branched or cyclic halogenated or non-halogenated alkyl radical having 3 to 30 carbon atoms or an aryl radical having 6 to 30 carbon atoms or an alkylaryl radical or an arylalkyl radical having 7 to 30 carbon atoms or an alkoxy alkylene oxide alkyl radical or alkoxy polyalkylene oxide alkyl radical,
all R^{b}, R^{c}, R^{d} and R^{e} independently denote a linear halogenated or non-halogenated alkyl radical having 1 to 30 carbon atoms, a branched or cyclic halogenated or non-halogenated alkyl radical having 3 to 30 carbon atoms or an aryl radical having 6 to 30 carbon atoms or an alkylaryl radical or an arylalkyl radical having 7 to 30 carbon atoms,
R^{d} and R^{e} can also independently denote R^{a}[SiR^{b}R^{c}O]ᵣ wherein
R^{a}, R^{b}, R^{c} and r are as defined above and are selected irrespectively.

2. The polysiloxane according to claim 1, **characterised in that** the Si-H functional polysiloxane is aliphatic.

3. The polysiloxane according to one of claims 1 or 2, **characterised in that** the at least one epoxy-functional, mono-vinyl functional component has the formula (II): 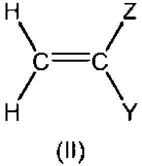 wherein
Z stands for hydrogen or an alkyl group with 1 to 4 carbon atoms and
Y stands for a monovalent radical of the following formula:
-L-Epoxy
wherein
L denotes a compound group and epoxy denotes an oxirane ring and wherein the oxirane ring is bound to the compound group L with one or both carbon atoms.

4. The polysiloxane according to one or a number of claims 1 to 3, **characterised in that** at least one mono-vinyl functional component different to the mono-vinyl functional polysiloxane and to the epoxy-functional mono-vinyl functional component is brought to reaction with the Si-H functional polysiloxane and this component has the formula (III): 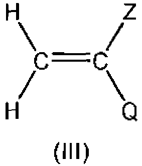 wherein
Z stands for hydrogen or an alkyl group with 1 to 4 carbon atoms and
Q stands for a monovalent radical of the following formula:
-(L')ᵥ-R
wherein v = 0 or 1,
L' denotes a compound group and
R stands for a radical -SiR^{x}ₙR^{y}₃₋ₙ, wherein
n = 1 to 3,
R^{x} stands independently for halogen, O-alkyl, or for O-CO-alkyl, and
R^{y} stands for alkyl or for aryl with 6 to 10 carbon atoms; or
R stands for a polymer radical with ether, ester and/or urethane groups.

5. The polysiloxane according to one or a number of claims 1 to 4, **characterised in that** at least one monohydroxy-functional, polymer component having ether, ester and/or urethane groups is converted by means of a condensation reaction with the Si-H functional polysiloxane before addition reactions of mono-vinyl functional components are carried out on the Si-H functional polysiloxane.

6. The polysiloxane according to one or more of claims 1 to 5, **characterised in that** this has the general formula (IV): 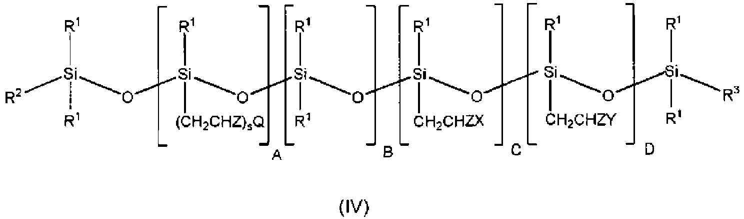 wherein
X, Y, Z and Q are defined as in claims 1 to 6,
s = 0 or 1;
R¹ independently denotes C₁-C₁₄-alkyl, C₆-C₁₀-aryl or C₇-C₁₂-aralkyl;
R² and R³ independently denote CH₂CHZX, CH₂CHZY or (CH₂CHZ)₆Q, or -(R⁴)ᵢ-C₁-C₁₄-alkyl, -(R⁴)ᵢ-C₆-C₁₄-Aryl or -(R⁴)ᵢ-C₇-C₁₄-aralkyl, wherein i = 0 or 1 and R⁴ stands for O, O-CO, O-CO-O or -OSO₂-;
A = 0 to 20, B = 2 to 300, C = 0 to 20 und D = 0 to 20;
wherein for C = 0, it applies that R² = X and/or R³ = X, and
wherein for D = 0, it applies that R² = Y and/or R³ = Y.

7. A method for the production of one or a number of polysiloxanes as they are defined in claims 1 to 6, **characterised in that** the Si-H functional polysiloxane is partially converted in an optional first stage with a monohydroxy-functional, polymer component by means of condensation reaction and is converted with the mono-vinyl functional components in a second stage by means of hydrosilylation reactions.

8. Composition comprising one or more of the polysiloxanes as defined in claims 1 to 6.

9. Composition according to claim 8, **characterised in that** said composition is a coating agent, a polymer moulding compound or a thermoplastic.

10. Compositions according to one of claims 8 or 9, **characterised in that** the composition contains epoxy resins.

11. Composition according to one of claims 8 to 10, **characterised in that** the polysiloxane or polysiloxanes as they are defined in claims 1 to 6 are contained in a total quantity of 0.1 to 10 wt.-% in relation to the total weight of the composition.

12. A method for coating a substrate selected from the materials metal, glass, ceramic and plastic, wherein a composition according to the invention as is defined in claims 8 to 11 is applied to the substrate, the coating is physically dried and/or hardened by means of reactive self-crosslinking and/or hardened by means of reactive external crosslinking.

13. A coated substrate obtainable according to the method according to claim 12.

14. A use of polysiloxanes as they are defined in claims 1 to 6 as an additive for compositions selected from the group of coating agents, polymer moulding compounds and thermoplastics for equipping the surfaces of the hardened compositions with anti-adhesive and/or dirt-repellent properties.

## Revendications

1. Polysiloxane pouvant être obtenu par addition d'au moins un polysiloxane à fonctionnalité monovinyle et d'au moins un composant à fonctionnalité époxy, à fonctionnalité monovinyle, à un polysiloxane à fonctionnalité Si-H, **caractérisé en ce que** l'au moins un polysiloxane à fonctionnalité monovinyle a la formule (I) : 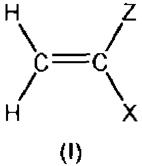 dans laquelle
Z représente un atome d'hydrogène ou un groupe alkyle ayant 1 à 4 atomes de carbone, et
X représente un radical monovalent ayant la formule suivante : 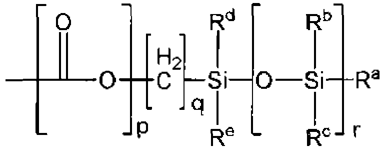
dans laquelle p = 0 ou 1, q = 0 à30 etr = 1 à 400, et, si p = 1, q ≥ 2,
R^{a} représente un radical alkyle halogéné ou non halogéné linéaire ayant 1 à 30 atomes de carbone, un radical alkyle halogéné ou non halogéné, ramifié ou cyclique ayant 3 à 30 atomes de carbone ou un radical alkyle ayant 6 à 30 atomes de carbone ou un radical alkylaryle ou un radical arylalkyle ayant 7 à 30 atomes de carbone ou un radical alcoxy(oxyde d'alkylène)alkyle ou un radical alcoxy(poly(oxyde d'alkylène))alkyle,
tous les radicaux R^{b}, R^{c}, R^{d} et R^{e} représentent chacun indépendamment des autres un radical alkyle halogéné ou non halogéné linéaire ayant 1 à 30 atomes de carbone, un radical alkyle halogéné ou non halogéné ramifié ou cyclique ayant 3 à 30 atomes de carbone ou un radical aryle ayant 6 à 30 atomes de carbone ou un radical alkylaryle ou un radical arylalkyle ayant 7 à 30 atomes de carbone,
R^{d} et R^{e} peuvent en outre, indépendamment l'un de l'autre, représenter R^{a}[SiR^{b}R^{c}O]ᵣ, formule dans laquelle
R^{a}, R^{b}, R^{c} et r sont tels que définis ci-dessus et sont choisis indépendamment de ceux-ci.

2. Polysiloxane selon la revendication 1, **caractérisé en ce que** le polysiloxane à fonctionnalité Si-H est caténaire.

3. Polysiloxane selon l'une des revendications 1 ou 2, **caractérisé en ce que** l'au moins un composant à fonctionnalité époxy, à fonctionnalité monovinyle, a la formule (II) : 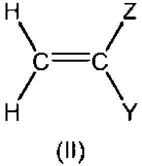 dans laquelle
Z représente un atome d'hydrogène ou un groupe alkyle ayant 1 à 4 atomes de carbone, et
Y représente un radical monovalent ayant la formule suivante :
-L-Epoxy
dans laquelle
L représente un groupe de liaison et époxy représente un noyau oxiranne, et le noyau oxiranne étant, par un atome de carbone ou par les deux, lié au groupe de liaison L.

4. Polysiloxane selon l'une des revendications 1 à 3, **caractérisé en ce qu'**au moins un composant à fonctionnalité monovinyle, différent du polysiloxane à fonctionnalité monovinyle et du composant à fonctionnalité époxy, à fonctionnalité monovinyle, est mis à réagir avec le polysiloxane à fonctionnalité Si-H, et que ce composant a la formule (III) : 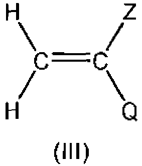 dans laquelle
Z représente un atome d'hydrogène ou un groupe alkyle ayant 1 à 4 atomes de carbone, et
Q représente un radical monovalent ayant la formule suivante :
-(L')ᵥ-R
dans laquelle v = 0 ou 1 ist,
L' représente un groupe de liaison, et
R représente un radical SiR^{x}ₙR^{y}₃₋ₙ, formule dans laquelle
n = 1 à 3,
les radicaux R^{x} représentent chacun indépendamment des autres un groupe halogéno, Oalkyle, ou O-CO-alkyle, et
les radicaux R^{y} représentent des groupes alkyle, ou aryle ayant 6 à 10 atomes de carbone ; ou
R représente un radical polymère comportant des groupes éther, ester et/ou uréthanne.

5. Polysiloxane selon l'une ou plusieurs des revendications 1 à 4, **caractérisé en ce qu'**on fait réagir au moins un composant polymère à fonctionnalité monohydroxy, qui comprend des groupes éther, ester et/ou uréthanne, par une réaction de condensation avec le polysiloxane à fonctionnalité Si-H, avant mise en oeuvre, sur le polysiloxane à fonctionnalité Si-H, de réactions d'addition de composants à fonctionnalité monovinyle.

6. Polysiloxane selon l'une ou plusieurs des revendications 1 à 5, **caractérisé en ce qu'**il a la formule générale (IV) : 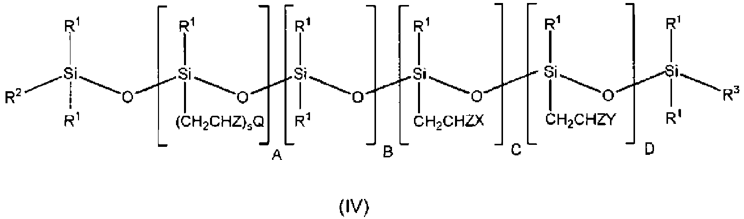 dans laquelle
X, Y, Z et Q sont tels que définis dans les revendications 1 à 6,
s = 0 ou 1 ;
les radicaux R¹ représentent chacun indépendamment des autres un groupe C₁-C₁₄-alkyle, C₆-C₁₀-aryle ou C₇-C₁₂-aralkyle ;
les radicaux R² et R³ représentent chacun indépendamment de l'autre un groupe CH₂CHZX, CH₂CHZY ou (CH₂CHZ)₆Q, ou -(R⁴)ᵢ-C₁-C₁₄-alkyle,
-(R⁴)ᵢ-C₆-C₁₄-aryle ou -(R⁴)ᵢ-C₇-C₁₄-aralkyle, où i = 0 ou 1, et R⁴ représente O, O-CO, O-CO-O our -OSO₂- ;
A = 0 à20, B = 2 à 300, C = 0 à 20 et D = 0 à 20 ;
quand C = 0, R² = X et/ou R³ = X, et
quand D = 0, R² = Y et/ou R³ = Y.

7. Procédé de préparation d'un ou plusieurs polysiloxanes tels que définis dans les revendications 1 à 6, **caractérisé en ce qu'**on fait partiellement réagir avec un composant polymère à fonctionnalité monohydroxy, par une réaction de condensation, le polysiloxane à fonctionnalité Si-H, et, dans une étape supplémentaire, on le fait réagir par des réactions d'hydrosilylation avec les composants à fonctionnalité monovinyle.

8. Composition comprenant un ou plusieurs des polysiloxanes tels que définis dans les revendications 1 à 6.

9. Composition selon la revendication 8, **caractérisée en ce qu'**il s'agit d'une composition de revêtement, d'un mélange à mouler polymère ou d'un thermoplastique.

10. Compositions selon l'une des revendications 8 ou 9, **caractérisées en ce que** la composition contient des résines époxydes.

11. Composition selon l'une des revendications 8 à 10, **caractérisée en ce que** le ou les polysiloxanes, tels que définis dans les revendications 1 à 6, sont contenus en une quantité totale de 0,1 à 10 % en poids par rapport au poids total de la composition.

12. Procédé de revêtement d'un substrat choisi parmi les matériaux métal, verre, céramique et plastique, dans lequel on applique sur le substrat une composition selon l'invention, telle que définie dans les revendications 8 à 11, on soumet le revêtement à un séchage physique et/ou on le durcit par une autoréticulation réactive et/ou on le durcit par une réticulation réactive externe.

13. Substrat revêtu pouvant être obtenu par le procédé selon la revendication 12.

14. Utilisation des polysiloxanes tels que définis dans les revendications 1 à 6 en tant qu'additifs pour des compositions choisies dans le groupe des compositions de revêtement, les mélanges à mouler polymères et des thermoplastiques, pour conférer aux surfaces des compositions durcies des propriétés antiadhésives et/ou antitaches.
